(19) Europäisches Patentamt / European Patent Office / Office européen des brevets

(11) **EP 4 025 930 B1**

(12) **EUROPEAN PATENT SPECIFICATION**

(45) Date of publication and mention
of the grant of the patent:
**07.02.2024  Bulletin 2024/06**

(21) Application number: **20771993.1**

(22) Date of filing: **02.09.2020**

(51) International Patent Classification (IPC):
*G01S 7/481* *(2006.01)*      *G01S 17/10* *(2020.01)*
*G01S 7/484* *(2006.01)*

(52) Cooperative Patent Classification (CPC):
**G01S 7/4814; G01S 7/484; G01S 17/10**

(86) International application number:
**PCT/EP2020/074511**

(87) International publication number:
**WO 2021/043851 (11.03.2021 Gazette 2021/10)**

(54) **SPOT PATTERN PROJECTOR FOR SOLID-STATE LIDAR SYSTEM**

FESTKÖRPER-LIDARSYSTEM ZUR BESTIMMUNG VON ENTFERNUNGEN ZU EINER SZENE

SYSTÈME LIDAR À L'ÉTAT SOLIDE POUR DÉTERMINER LES DISTANCES À UNE SCÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.09.2019  EP 19195236**
**12.02.2020  EP 20157014**

(43) Date of publication of application:
**13.07.2022  Bulletin 2022/28**

(73) Proprietor: **Xenomatix NV**
**3001 Leuven (Heverlee) (BE)**

(72) Inventors:
• **PAESEN, Rik**
**3590 Diepenbeek (BE)**
• **GEUENS, Filip**
**3220 Holsbeek (BE)**

(74) Representative: **IPLodge bv**
**Technologielaan 9**
**3001 Heverlee (BE)**

(56) References cited:
WO-A1-2015/042331      WO-A1-2017/068199
JP-A- 2003 131 165      US-A1- 2016 025 993
US-B1- 9 273 846

## Description

### Field of the disclosure

The present disclosure relates to a LIDAR (Light Detection And Ranging) system for determining distances to a scene by using laser beams and a time-of-flight (TOF) based sensing system. More particularly, the present disclosure is related to a LIDAR projector for illuminating a scene with a discrete spot pattern.

### Background

LIDAR systems measure the distance to a scene by illuminating the scene with laser light and by detecting reflected laser light in a detector, generally located near the laser source that emitted the laser light.

Generally, a LIDAR system comprises two major components: a projector configured for illuminating the scene with laser light and a detection system for detecting the reflected laser light. Some LIDAR systems make use of a projector that is illuminating the scene with a homogenous flat laser light pattern, also named global illumination, and the detection system is adapted accordingly to determine distance information based on reflected light following the global illumination. The present disclosure is however related to LIDAR systems wherein the projector is illuminating the scene with a discrete spot pattern of laser light and wherein the detection system is adapted to determine distance information based on reflected laser light following the spot pattern illumination.

Most known LIDAR systems make use of a direct TOF (DToF) detection method. These systems comprise a powerful pulsed laser, operating in a nanosecond pulse regime, a mechanical scanning system to scan the pulsed laser beam, and a pulse detector. Systems of this type are presently available from vendors including Velodyne LIDAR of Morgan Hill, California. The Velodyne HDL-64E, as an example of state-of-the-art systems, uses 64 high-power lasers and 64 avalanche diode detectors in a mechanically rotating structure at 5 to 15 rotations per second.

These DToF system are known to measure distances with a high spatial accuracy. However, these systems have also a number of drawbacks. For example, these systems require lasers having a power level that is too high to be obtained with currently available semiconductor lasers, whose power level is orders of magnitude lower. In addition, the use of mechanically rotating elements for scanning purposes further limits the prospects for miniaturization, reliability, and cost reduction of this type of system.

Compactness of the LIDAR system is an important factor for applications in the automotive sector where the LIDAR system is for example to be coupled to a front windshield or a front bumper of a car. Indeed, LIDAR systems are a key factor for the development autonomous driving or driver assistance systems. In this context, LIDAR systems are used to detect obstacles, such as other vehicles or objects in the environment of the vehicle.

In WO2017/068199, a solid-state LIDAR system is proposed that allows to place a projector and a detection system based on solid-state technology in a compact housing. The system is based on a range-gating detection technique which is distinct from the DToF technique. This system disclosed in WO2017/068199 comprises a projector for illuminating the scene with a discrete spot pattern wherein each spot is comprising a temporal sequence of pulses of laser light. The laser light is provided by solid-state lasers forming a compact and low-power laser system, as an array of solid state lasers being semiconductor based lasers known also as VCSELs. Each of the laser beams is a pulsed laser beam comprising a temporal sequence of pulses of laser light. A CMOS-based range-gating detector is used for detecting spots of reflected laser light representing the discrete spot pattern as reflected by the scene. The detector also comprises control means for accumulating the reflected laser light in synchronization with the illumination of the scene. Processing means finally allow for calculating the distance to the scene based on the accumulated reflected laser light.

Developing a solid-state projector for a LIDAR system that is based on a discrete spot pattern illumination, as described in WO2017/068199, is challenging. Indeed, as different individual laser light sources are used, there is for instance a variation in the properties of the individual laser light sources, including but not limited to variations in intensity, beam divergence, angular irradiance, wavelength, pulse shape and thermal behaviour. This leads to a projection of a non-uniform spot pattern, both temporally and spatially, on the scene. All these elements have an impact on the overall performance of the LIDAR system, e.g. on the precision and/or the accuracy of the distance determination and the distance range that can be covered.

Hence, there is room for improving LIDAR projectors for generating a discrete spot pattern.

US2016/025993 A1 discloses an optoelectronic device which includes a semiconductor substrate, an array of optical emitters arranged on the substrate in a two dimensional pattern, a projection lens and a diffractive optical element configured to produce and project multiple overlapping replicas of a pattern.

### Summary

It is an object of the present disclosure to provide a robust, reliable, compact and cost- effective projector for illuminating a scene with a discrete spot pattern and wherein the projector is conceived for being used as part of a solid-state LIDAR system for determining distances with an acceptable spatial accuracy as required for specific applications, such as for example automotive applications.

The present invention is defined in the appended independent claims. The dependent claims define advantageous embodiments.

According to an aspect of the disclosure, a projector for illuminating a scene with a discrete spot pattern is provided.

Such a projector according to the present disclosure comprises a laser array such as a one-dimensional or a two-dimensional laser array, a mixing chamber, a reshaping optical system and a projector lens system.

The laser array comprises a plurality of discrete solid-state laser light sources operable for emitting a diverging first laser beam.

The mixing chamber is extending along a main optical axis Z of the projector and is configured for receiving and allowing each of the first laser beams to diverge until, for each first laser beam, at least a portion of its light rays is overlapping with light rays of adjacent first laser beams.

The mixing chamber is to be construed as a hollow body wherein a circumferential side of the mixing chamber is forming the three-dimensional hollow body. The circumferential side is a wall of the mixing chamber.

The reshaping optical system is configured for receiving the overlapping light rays of the first laser beams exiting the mixing chamber, preferably refocussing the overlapping light rays, and generating a plurality of discrete second laser beams wherein each second laser beam comprises light rays originating from multiple first laser beams.

The projector lens system is configured for receiving the second laser beams and projecting the second laser beams towards the scene, and wherein the projected second laser beams are forming the discrete spot pattern.

With the projector according to the present disclosure, multiple existing shortcomings with prior art devices are concurrently solved and performances improved, as will be discussed below in more detail.

Advantageously, the mixing of the first laser beams, will lead to a homogeneous power field incident to the reshaping optical system, which will further result in a more uniform spot pattern formed by the second laser beams, which, for instance, increases the accuracy of a LIDAR system using the present projector for the illumination of a scene.

Moreover, this mixing will lead to improved repeatability of pulse shapes and its optical characteristics projected onto a scene in the temporal domain and in the spatial domain.

Advantageously, by mixing the laser light of the first laser beams, the quality constraints with respect to the solid-state laser light sources, e.g. an array of VCSEL laser sources, can be reduced. Indeed, as multiple laser sources are mixed, the effect of a faulty first laser beam, i.e. a single laser emitter, on the overall light intensity and light distribution of the second laser beams is small. It improves the production yield, hence the cost of the VCSEL array and it also improves the robustness of the LIDAR system.

Advantageously, small VCSEL chips can be arranged as a one dimensional or a two dimensional array of VCSEL chips forming the laser array. Each VCSEL chip comprises a plurality of laser emitters. In this way, by working with smaller VCSEL chips a productivity problem of building large chips is solved and the production cost is reduced.

Advantageously, by bundling the light intensity of multiple first laser beams to form the second laser beams, the intensity and the brightness of the second laser beams can be increased by forming the second laser beams such that the number of second laser beams is lower than the number of initial first laser beams. This increases the detection liability and the range of the system. The intensity and brightness of a laser beam is respectively defined as the optical power, e.g. expressed in watts, per surface area of the spot, and by the optical power per solid angle, i.e. irradiance.

Advantageously, the reshaping optical system can be adjusted for tuning the spot size of the second laser beams. For example, large diameter spots sizes can be used in a forward direction to illuminate the road while smaller diameter spots can be used to illuminate the surroundings.

Advantageously, the projector according to the present disclosure can be part of a LIDAR system wherein a range-gating detection technique for detecting reflected laser light is used, while maintaining a high spatial accuracy, as for example required for automotive applications. Indeed by providing a mixing chamber and a reshaping optical system, the coherent light of the various first laser beams are mixed and the resulting second laser beams comprise substantially in-coherent laser light. As a result, a dominant speckle problem that is leading to spatial inaccuracy, as observed by the inventors when using range-gating based prior art LIDAR systems, is strongly reduced.

According to an alternative claimed at least a portion of an inner wall of the mixing chamber is a reflective wall for reflecting laser light.

In embodiments, the laser light produced by the discrete solid-state laser light sources laser has a wavelength between 800 nm and 1600 nm.

In embodiments, the length H of the mixing chamber is determined such that following propagation of the first laser beams through the mixing chamber, 20% or more, preferably 40% or more and more preferably 60% or more, of the light rays of each first laser beam is overlapping with light rays from adjacent first laser beams.

In some embodiments, following propagation through the mixing chamber, 100% of the light rays of each first laser beam is overlapping with light rays of adjacent first laser beams.

In embodiments, each laser light source is configured for emitting the first laser beams with a diverging angle equal or lower than 15°.

In embodiments, the solid-state laser light sources are grouped into tiles. The tiles are then forming for example a one-dimensional or a two-dimensional array of tiles. Each tile comprises a number of solid-state laser light sources, i.e. emitters. The tiles can be construed as a sub-array of solid-state light sources, for example a one-dimensional or a two-dimensional sub-array of solid-state light sources. In embodiments, the length of the mixing chamber measured along the main optical axis is then further defined such that, following propagation of the first laser beams through the mixing chamber, for each tile at least a portion of its light rays is overlapping with light rays of adjacent tiles. In embodiments, a tile is a VCSEL chip comprising a plurality of laser emitters and wherein each laser emitter is to be construed as a solid-state laser light source.

In embodiments, 20% or more, preferably 40% or more, more preferably 60% or more of the light rays of each tile is overlapping with light rays of adjacent tiles. In some other embodiments, 100% of the laser light of each tile is overlapping with light rays adjacent tiles.

Advantageously, cheaper, commercially available VCSEL tiles can be used as the primary laser light sources for producing the first laser beams.

Advantageously, when using VCSEL tiles as primary laser sources, the tiles can be connected in series, requiring a lower driving current and hence less heat dissipation. This also reduce the cost of the system and improves robustness and the thermal management of the system.

According to another alternative claimed at least a portion of an inner wall of the mixing chamber comprises a mirror. Advantageously, light emitted by peripheral light sources of the laser array might hit the mirror and be reflected back in the mixing chamber. The mirror contributes to obtaining a homogenous light distribution in a plane perpendicular to the main optical axis.

According to the invention, the reshaping optical system comprises a micro-lens array comprising a plurality of micro-lenses wherein each micro-lens is configured for generating one of the second laser beams.

In embodiments, the first micro-lens array is configured such that each micro-lens comprises a focal point located on a flat plane or on a curved plane, and wherein the flat plane or the curved plane is located between the first micro-lens array and the projector lens system.

In further embodiments, each micro-lens of the first micro-lens array comprises a focal point located on a curved plane and wherein said curved plane corresponds to a curved focal plane of the projector lens system. Advantageously, the projector lens system does not need additional lenses for correcting for optical aberrations of the projector lens system, more precisely correcting for the Petzval field curvature.

In embodiments, each micro-lens of the first micro-lens array comprises a rear focal point located on a curved plane and wherein said curved plane corresponds to a curved front focal plane of the projector lens system.

In some embodiments, each of the micro-lenses of the first micro-lens array comprises an optical axis parallel with the main optical axis of the projector.

In preferred embodiments, at least a portion of the micro-lenses of the first micro-lens array comprise an optical axis that is not parallel with the main optical axis of the projector. Advantageously, the size of the projector lens system can be reduced. For example the diameter of the projector lens system can be reduced.

In embodiments, each laser light source of the laser array has an emission surface located in an emission plane X-Y, and wherein the first laser beams are propagating in a direction parallel with the main optical axis Z perpendicular to said emission plane X-Y.

In embodiments, the projector according to the present disclosure further comprising a second micro-lens array configured for decreasing a divergence angle of the first laser beams emitted by the solid-state laser light sources, preferably the second micro-lens array is arranged between the laser array and the first micro-lens array.

In preferred embodiments, the number of micro-lenses in the first micro-lens array is smaller than the number of solid-state laser light sources of the laser array. Generally, the number of micro-lenses of the first micro-lens array is selected as function of the number of spots that need to be provided for the discrete spot pattern.

In some embodiments wherein the laser array is formed by a plurality of VCSEL chips and wherein the projector comprises a second-micro lens array, the number of micro-lenses in the second micro-lens array is equal or smaller than a total number of emitters of the laser array. The total number of emitters of the laser array is the sum of all emitters in each of the VCSEL chips of the laser array.

In other embodiments, the projector further comprises anyone of, or any combination of, a diffuser, a circulator, a Bragg volume grating and a beam expander.

Advantageously, in particular for embodiments of projectors comprising a beam expander, it is possible to use a tile-based array without suffering detrimental effects of the seams that are inevitably present between the tiles. Indeed, beam expanders are configured for increasing illumination in inter-tile areas so as to increase a homogeneity of a light distribution incident on the first micro-lens array.

According to a further aspect of the present disclosure, a solid-state LIDAR system for determining distances to one or more objects of a scene is provided.

Such a solid-state LIDAR system comprises besides the projector discussed above, a light receiving device comprising a multi-pixel detector, e.g. range-gating or direct time of flight type of detector, configured for detecting spots of reflected laser light representing the discrete spot pattern as reflected by the one or more objects of the scene, a controller for controlling the projector and the light receiving device so as to detect and accumulate the reflected laser light in synchronization with the illumination of the scene, and processing means configured to calculate distances to one or more objects of the scene based on the accumulated reflected laser light.

In some embodiments based on the range-gating detection technique, the solid-state LIDAR system is configured for detecting reflected laser light during at least two successive detection time windows, and the processing means are configured to calculate the distance to the object based on laser light detected during the two successive detection time windows.

In embodiments based on the range-gating detection technique, the controller of the solid-state LIDAR system is configured to control the laser array such that each of the plurality of discrete solid-state laser light sources is emitting the first pulses at a pulse frequency such that $F_P \leq 1/(TOF_{max} + PW)$, with $F_P$ being the pulse frequency, with PW being the temporal pulse width, and with $TOF_{max}$ being a maximum time of flight for a predefined maximum distance $D_{max}$ to an object to be determined. This maximum distance can be construed as the maximum operational range of the LIDAR system. This maximum operational range can for example be a value between 50 and 500 meter.

In some embodiments, an inter-tile spacing ($\Delta_T$) between the tiles is equal or larger than 0.3 millimeter, and wherein for each of the tiles, an inter-distance between the solid-state laser light sources ($\Delta_{VCSEL}$) of the tile is equal or lower than 0.1 millimeter.

In embodiments, the processing means comprise a processor or a microprocessor.

In embodiments, the projector lens system of the projector comprises a projector lens, such as an objective lens.

**In** embodiments, one or more optical laser light reflecting elements are located inside the mixing chamber for extending the travelling path of the first laser beams. Advantageously, the length of the mixing chamber can be reduced while maintaining a sufficient mixing of the first laser beams.

## Short description of the drawings

These and further aspects of the present disclosure will be explained in greater detail by way of example and with reference to the accompanying drawings in which:

| | |
|---|---|
| Fig.1 | schematically illustrates a LIDAR system according to the disclosure, |
| Fig.2 | schematically illustrates a discrete spot pattern projected on a scene, |
| Fig.3 | schematically illustrates a temporal sequence of pulses forming a pulsed laser beam, |
| Fig.4 | schematically illustrates a repetition of a number of frames, |
| Fig.5 | schematically illustrates a cross-sectional view of a projector according to embodiments of the disclosure, |
| Fig.6 | schematically illustrates a VCSEL tile geometry, |
| Fig.7 | schematically illustrates a concept according to the disclosure for mixing first laser beams to form second laser beams, |
| Fig.8 | schematically illustrates a cross-sectional view of a projector according to embodiments of the disclosure wherein the projector comprises a VCSEL tile laser array, |
| Fig.9 | schematically illustrates a cross-sectional view of part of a projector according to an embodiment of the disclosure comprising a micro-lens array wherein the focal points are located on a curved plane, |
| Fig.10 | schematically illustrates a cross-sectional view of part of a projector according to a further embodiment of the disclosure comprising a micro-lens array wherein the focal points are located on a curved plane, |
| Fig.11 | schematically illustrates a cross-sectional view of a projector comprising a micro-lens array wherein each micro-lens has an optical axis parallel with a main optical axis of the projector, |
| Fig.12 | schematically illustrates a part of a projector comprising a front end emitting VCSEL laser array, |
| Fig.13 | schematically illustrates a back end emitting VCSEL laser array, |
| Fig.14a to Fig.14h | schematically illustrate cross-sections of various embodiments of projectors according to the disclosure, |
| Fig.15a and Fig.15b | schematically illustrate the optical effect of the second micro-lens array as presented in Fig.14b, |
| Fig.16a and Fig.16b | schematically illustrate possible implementations of the beam expander presented in Fig.14f, |
| Fig.17a and Fig.17b | schematically illustrate two embodiments of a mixing chamber, |

Fig.18          schematically illustrated an embodiment of a circulator,
Fig.19          schematically illustrates the operating principle of a diffuser.

The drawings of the figures are neither drawn to scale nor proportioned. Generally, identical components are denoted by the same reference numerals in the figures.

**Detailed description of embodiments**

The present disclosure will be described in terms of specific embodiments, which are illustrative of the disclosure and not to be construed as limiting. It will be appreciated by persons skilled in the art that the present disclosure is not limited by what has been particularly shown and/or described and that alternatives or modified embodiments could be developed in the light of the overall teaching of this disclosure. The drawings described are only schematic and are non-limiting.

Use of the verb "to comprise", as well as the respective conjugations, does not exclude the presence of elements other than those stated. Use of the article "a", "an" or "the" preceding an element does not exclude the presence of a plurality of such elements.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the disclosure described herein are capable of operation in other sequences than described or illustrated herein.

Reference throughout this specification to "one embodiment" or "an embodiment" means that a particular feature, structure or characteristic described in connection with the embodiments is included in one or more embodiment of the present disclosure. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one ordinary skill in the art from this disclosure, in one or more embodiments.

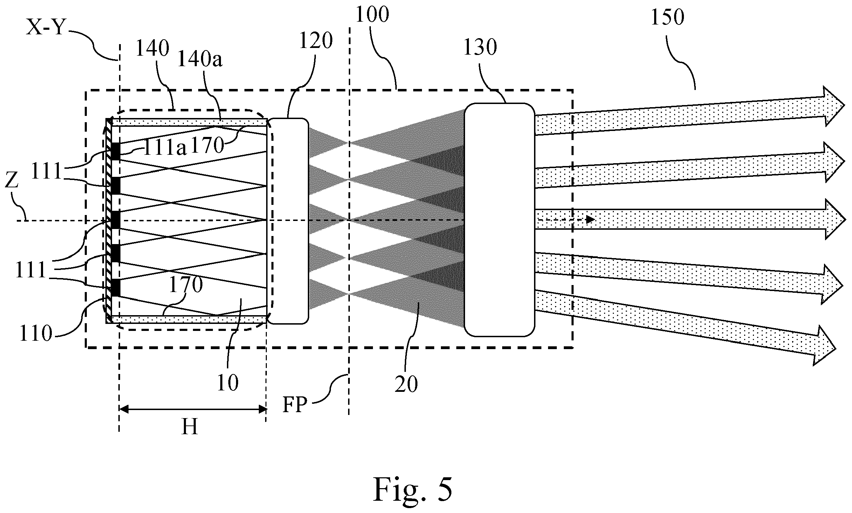

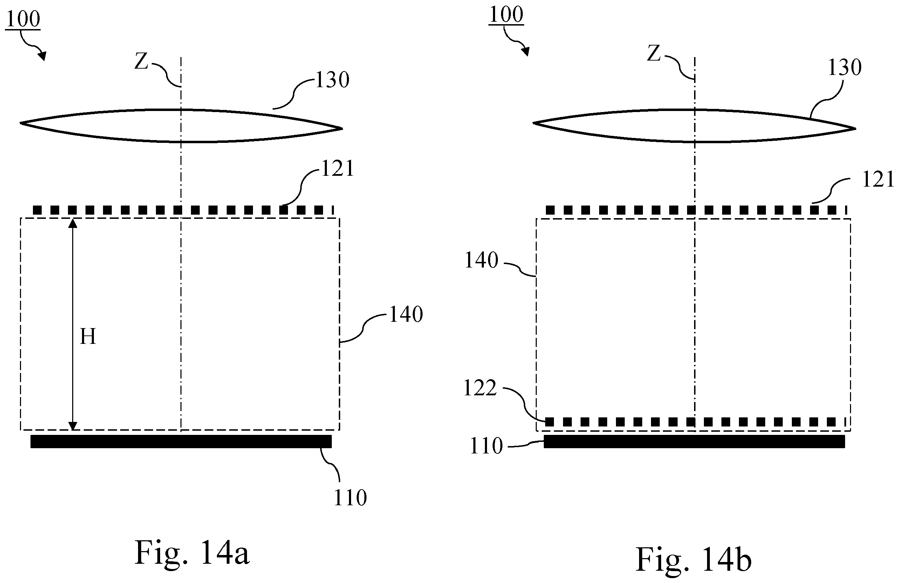

According to an aspect of the disclosure, a projector for illuminating a scene with a discrete spot pattern is provided. Such a projector can for instance be used in a solid-state LIDAR system for determining distances to a scene. Cross-sectional views of various embodiments of projectors according to the present disclosure are shown on Fig.5, Fig.8 to Fig.11 and on Fig.14a to Fig.14h. These various embodiments will be further discussed here below.

When used in a LIDAR system, embodiments of projectors of the present invention provide the advantage of improving the accuracy and precision of the LIDAR system. As used herein and with reference to LIDAR systems, the term "accuracy" refers to the difference between the mean of the distance measurements and the actual distance, whereby a higher accuracy corresponds to a smaller difference; the term "precision" refers to the spread (as expressed by the standard deviation or equivalent measure) of the distance measurements around the mean, whereby a higher precision corresponds to a smaller spread.

Without loss of generality, the projector of the present disclosure will be described hereinbelow with reference to its application in a LIDAR system. The LIDAR system may for example operate on the basis of the Direct Time-of-Flight (DToF) principle or on the basis of range gating or on the basis of any other distance determination method. The skilled person will appreciate that the projector system of the present disclosure may also be used in other metrology and telemetry systems, such as but not limited to displacement based ranging systems. The projector system of the present disclosure may also be used in non-telemetry applications.

*Solid state LIDAR system, general*

A LIDAR system has to be construed as any system that is measuring distances to one or more object of a scene by illuminating the scene with laser light and measuring the reflected laser light with a detector. The present disclosure addresses however a specific category of LIDAR systems, namely so-called "solid-state" LIDAR systems making use of semiconductor technology. The solid-state LIDAR systems have to be construed as systems using both solid state technology for producing the laser light and as well as the detector for detecting the reflected laser light. For example, in embodiments, the laser light is produced by VCSEL-type semiconductor lasers and the detector is a CMOS-based semi-conductor pixel detector.

A scene is to be construed as an area, for example an area as observed by a LIDAR device mounted to a windshield or a bumper of a car. Depending on the field of view of the LIDAR device, the scene can cover a large area or a smaller area. A field of view for automotive applications is for example $30° \times 10°$, $120° \times 20°$ or any other field of view The scene can comprise for example various objects being located at different distances from the LIDAR device or few objects or only one object. The LIDAR system aims at performing a distance mapping of the scene thereby identifying different distances to objects or distances to portions of the scene.

Depending on the type of LIDAR system, the laser light used by a LIDAR system can be a continuous wave, a pulsed wave or an amplitude modulated wave.

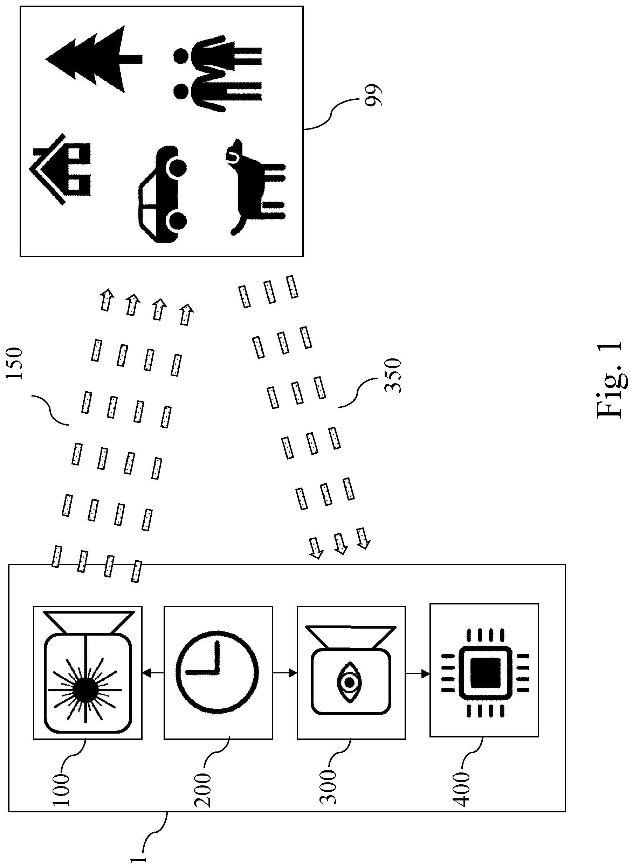

**An** example of an embodiment of solid-state LIDAR system 1 according to the disclosure is schematically illustrated on Fig.1. Such a system 1 for determining distances to a scene 99 comprises a projector 100 for illuminating the scene 99 with a discrete spot pattern 150 wherein each spot is comprising a temporal sequence of pulses of laser light, and a light receiving device 300 comprising a multi-pixel detector, for example a range-gating multi-pixel detector or a Direct Time-of-Flight based multi-pixel detector, configured for detecting spots of reflected laser light representing the discrete spot pattern as reflected by the objects of the scene. The reflected laser light is forming a reflected discrete spot pattern 350 and is schematically indicated on Fig.1. The reflected discrete spot pattern 350 corresponds to the discrete spot pattern 150 as reflected by the object of the scene and is observed on the range-gating multi-pixel detector as a plurality of detected spots.

Remark that on Fig.1 the projected spot pattern and the reflected spot pattern are schematically represented as interrupted lines for illustrative purpose only and hence these interrupted lines do not present a real timing of the pulses. Indeed, in practice, as will be discussed below, when a pulse of the sequence of pulses is emitted, the next pulse of the sequence is generally only emitted after the previous pulse has, after a potential reflection of an object, been detected in the detector.

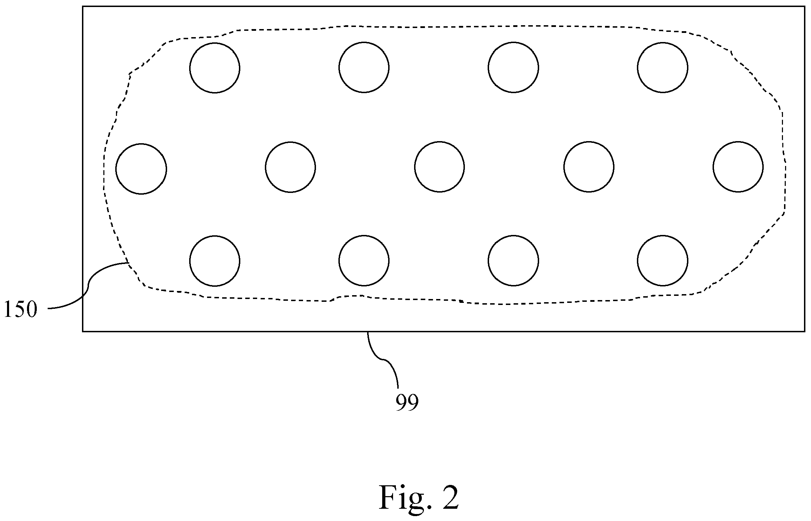

An example of a discrete spot pattern 150 that is illuminating a scene 99 is further illustrated on Fig.2. The circles on Fig.2 schematically illustrate the spots of the discrete spot pattern 150. Discrete spots have to be construed as spots that are separated from each other, as shown on Fig.2. The spot pattern can be a regular pattern or an irregular pattern. The number of spots of the spot pattern can vary from embodiment to embodiment and is for example in a range between 10000 and 100000 spots. In some embodiments, the number of spots can also be much lower and be as low as four spots. As mentioned above, each spot comprises a sequence of pulses of laser light, typically provided by a pulsed laser beam.

The wavelength of the laser light produced by the laser beams forming the discrete spot of the LIDAR system according to the disclosure is typically between 800 nm and 1600 nm.

In embodiments wherein a range-gating multi-pixel detector is used, such a range-gating multi-pixel detector has to be construed as a detector comprising multiple pixels and wherein the detector is configured for detecting and accumulating laser light in at least two consecutive detection time windows.

An example of a range-gating multi-pixel detector is described in WO2017/068199. Such a detector is based on a range-gating technique which is distinct from the direct TOF technique. With the range-gating technique, reflected laser light is detected as function of time during at least two subsequent time windows and wherein the time window is essential equal to the pulse width of the emitted laser pulses forming the discrete spot pattern. The first time window generally substantially overlaps with the time period corresponding to the emission of the pulse. Based on the intensities identified in the at least two time windows the distance to the scene can be determined.

The solid-state LIDAR system 1 further comprises, as schematically shown on Fig.1, a controller 200 for controlling the light receiving device 300 and the projector 100 so as to detect and accumulate the reflected laser light in synchronization with the illumination of the scene. The LIDAR system 1 also comprises processing means 400 configured to calculate distances to the objects of the scene based on the accumulated reflected laser light. In embodiments, the controller 200 comprises synchronization means which may include a conventional clock circuit or oscillator. The processing means 400 generally comprise a processor or a computer comprising algorithms, known in the art, for calculating the distance to an object based on the reflected laser light detected.

In other embodiments, the solid-state LIDAR system is not using a time of light technique for determining distances to a scene, but instead a displacement technique is used as disclosed for example in WO2015/004213. These type of displacement-based LIDAR systems, comprise a multi-pixel detector and processing means configured for determining a characteristic of an object, such as a distance to an object, by determining a displacement of detected spots detected with the multi-pixel detector with reference to predetermined spot positions. The projector according to the present disclosure, as will be discussed in more detail here below, can be used for both time-of-flight based LIDAR systems or displacement-based LIDAR systems.

In embodiments, the solid-state LIDAR system according to the disclosure comprises a housing enclosing at least the projector 100 and the light receiving device 300. In other embodiments, the solid-state LIDAR system according to the disclosure comprises a housing enclosing the projector 100, the light receiving device 300 and the controller 200, and preferably also comprising the processing means 400.

In embodiments, the light receiving device 300 comprises an objective lens for projecting the reflected pattern of laser light on the range gating multi-pixel detector. In preferred embodiments, the light receiving device 300 further comprises a narrow bandpass filter, for example for filtering out daylight.

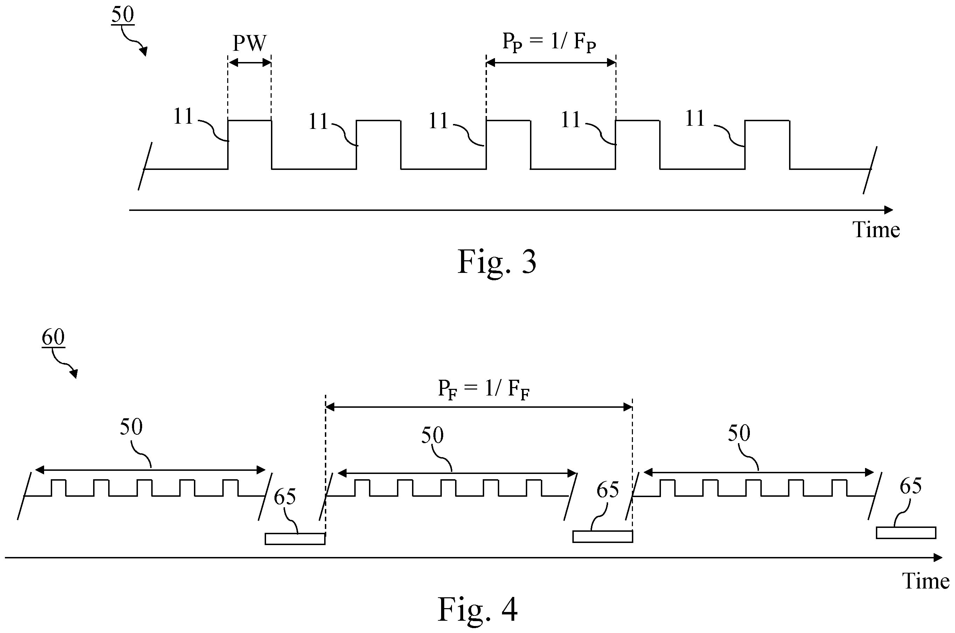

As discussed above, for determining a distance to an object, multiple frames are taken for determining an average object distance. Therefore, the illumination of the scene with the discrete spot pattern is repeated a number of times such that a multiple number of distances, i.e. single-frame distance measurements, are obtained allowing to take an average value of the multiple single-frame measurements. Frames can be repeated at a frame rate $F_F$, which is generally much lower than the pulse frequency $F_P$ of the pulses in the projected laser beams. In Fig.4 an example of a repetition of frames 60 is schematically illustrated and the frame rate $F_F$ is indicated. In this example a repetition of three frames is shown, in practice the number of frame repetitions to determine an average distance value is generally much larger. As schematically illustrated on Fig.4, following each pulse train 50, a processing time 65 is required to read out the exposure values and process the acquired data. The frame rate $F_F$ that can be reached is typically in the Hz range, in embodiments, the frame rate is for example between 5 Hz and 50 Hz. The frame rate is generally limited by the speed of the CMOS detector and also generally limited by eye safety regulations.

*Projector for generating a discrete spot pattern, general*

An embodiment of a projector 100 for a solid-state LIDAR system 1 according to the present disclosure is schematically shown on Fig.14a and further illustrated in more detail on Fig.5. The projector 100 comprises a laser array 110, for example a one-dimensional or a two-dimensional laser array 110, a mixing chamber 140, a reshaping optical system 120 and a projector lens system 130.

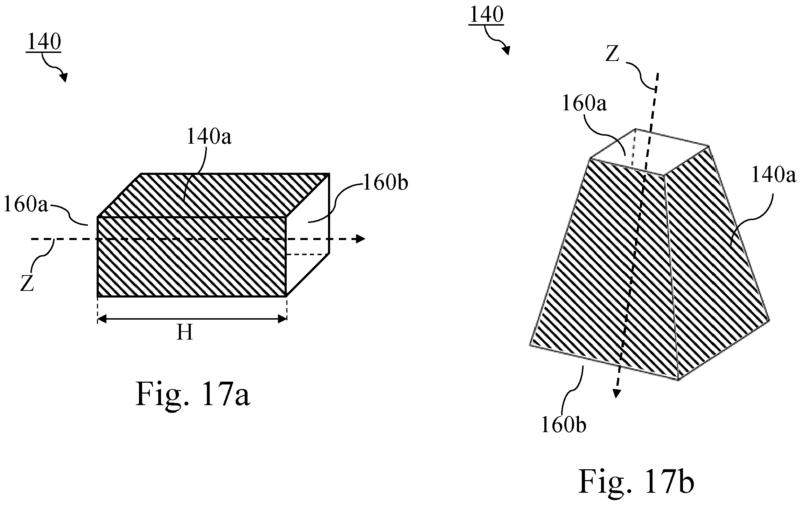

The mixing chamber is to be construed as a hollow three-dimensional body. In Fig.5, a dotted contour is indicating the mixing chamber 140 and a circumferential wall of the mixing chamber is indicated with reference 140a. Example of embodiments of mixing chambers 140 are shown on Fig.17a and Fig.17b and are further discussed below. Other embodiments of projectors according to the present disclosure comprising additional components are illustrated on Fig.14b to Fig.14h and will also be further discussed below.

The laser array 110 comprises a plurality of discrete solid-state laser light sources 111. In embodiments, the solid-state laser light source 111 is a semiconductor laser, such as for example a VCSEL semiconductor laser.

In embodiments as illustrated on Fig.5, the solid-state laser sources typically have an emission surface 111a located in an emission plane X-Y of the array. The laser array 110 is operable such that each laser light source is simultaneously emitting a first laser beam 10 diverging in a direction parallel with a main optical axis Z of the projector. In this exemplary embodiment shown on Fig.5, the main optical axis Z of the projector is perpendicular to the emission plane X-Y. In this way, a plurality of parallel first laser beams are obtained propagating in a direction parallel with the main optical axis.

In other embodiments, the emission surface of each of the solid-state laser light sources is not necessarily perpendicular to the main optical axis Z of the projector. In embodiments, the laser array may for example be formed on a generally curved substrate surface, whereby the respective directions of individual laser beams are not strictly parallel to each other but deviate to varying extents from an average optical axis.

**In** embodiments, the first laser beams are continuous wave laser beams. In other embodiments, the first laser beams are pulsed, and wherein each of the pulsed first laser beams emitted by the solid-state laser sources comprises a temporal sequence of first pulses having a temporal pulse width PW.

The mixing chamber 140 is extending along the main optical axis Z and is configured for receiving and allowing propagation of each of the first laser beams 10 in a direction parallel with the main optical axis Z until at least a portion of light rays of each first laser beam is overlapping with light rays of adjacent first laser beams. Indeed, as the first laser beams emitted by the solid-state laser sources are divergent beams, e.g. having for example a divergence angle between 5° and 15°, the first beams will, after having propagated over a given distance in the mixing chamber, start overlap. Overlapping is to be construed as spatially overlapping.

In embodiments, the divergence angle of the first laser beams is equal or smaller than 25°.

By using a mixing chamber as discussed above and allowing the light rays of a laser beam overlap with light rays from adjacent laser beams, the coherent laser light of each individual laser source is being mixed with coherent laser light from a plurality of other laser sources. In this way, mixing of the first laser beams will lead to a decrease in coherence of the light incident on the reshaping optical system 120 and the second laser beams forming the spot pattern emitted by the projector lens system 130 will be less coherent.

The mixing chamber has a length H measured along the main optical axis Z. The longer the length of the mixing chamber the more the light rays of each laser beam will become inter-mixed with the light rays from other laser beams.

In embodiments, the length H of the mixing chamber is determined such that following propagation of the first laser beams through the mixing chamber, 20% or more, preferably 40% or more, more preferably 60% or more of the laser light of each first laser beam is overlapping with adjacent first laser beams. In other embodiments, following propagation through the mixing chamber, 100% of the laser light of each first laser beam is overlapping with adjacent first laser beams.

The person skilled in the art will define the length H of the mixing chamber in accordance with an amount of mixing required to create a homogenous power field for creating a uniform spot pattern. At the same time, coherence of the laser light is being sufficiently reduced in order to minimize the impact of speckle on the spatial accuracy. When determining the length H, it is also taken into account that the LIDAR system should be kept compact. The skilled person can for example follow an iterative process to determine the amount of overlapping laser light required by modifying the length H a sufficient amount of mixing is reached. Other examples on how to determine an optimum length H of the mixing chamber will be further discussed below in more detail.

The reshaping optical system 120 is located between the mixing chamber 140 and the projector lens system 130. The reshaping optical system is configured for receiving the overlapping light rays of the first laser beams 10 exiting the mixing chamber 140, and for refocussing the overlapping light rays to form a plurality of discrete second laser beams 20. These second laser beams 20 are forming the discrete spot pattern 150. Discrete laser beams have to be construed as beams that are spatially separated.

In embodiments wherein the first laser beams are pulsed laser beams, the second laser beam are also pulsed laser beams and each of the pulsed second laser beams comprises a temporal sequence of second pulses having the temporal pulse width PW. Indeed, the second laser beams remain to have the same temporal pulse width PW as the first pulsed laser beams as nor the mixing chamber nor the reshaping optical system is altering the temporal pulse width of the laser beams. Also the frequency of the second pulsed laser beams is the same as the frequency of the first pulsed laser beams.

Indeed, the mixing chamber only allows to have the first laser beams diverge along a given distance corresponding to the length of the mixing chamber.

In embodiments, the reshaping optical system 120 can however alter the intensity of the second beams when compared to the intensity of the first beams if the number of second laser beams formed by the reshaping optical system is lower than the number of first laser beams.

In some other embodiments, the reshaping optical system produces second laser beams having a lower intensity than the first laser beams.

Figure 3 is related to an embodiment having pulsed first and second laser beams. In Fig.3, an example of a temporal sequence of pulses 11 forming a pulsed second laser beam, is schematically shown. Such a temporal sequence of pulses is also named a pulse train 50. In this illustrative example, only 5 pulses are shown, in practice however the number of pulses in a pulse train is generally much larger. For example, in some embodiments, the number of pulses in a pulse train is ranging between 50 and 500 pulses. These pulses are typically block pulses. The temporal pulse with PW of the pulse 11 and the pulse period $P_P$, being the inverse of the pulse frequency $F_P$, are indicated on Fig.3. The number of pulses in the sequence can depend on various factors such as for example the amplitude per pulse which might be limited for reasons of eye safety, and/or the number of pulses can be defined for obtaining a sufficient signal to noise ratio for detecting reflected laser light.

In embodiments, the controller 200 of the solid-state LIDAR system 1 is configured for controlling the laser array 110 such that each of the plurality of discrete solid-state laser light sources is emitting the first pulses at a pulse frequency $F_P$ such that $F_P \leq 1/(TOF_{max} + PW)$, with PW being the temporal pulse width defined above and $TOF_{max}$ being the maximum time of flight of a predefined maximum distance $D_{max}$ that needs to be determined. This maximum distance $D_{max}$ can be construed as the maximum operational range of the solid-state LIDAR system, it defines up to what maximum distance an object in the scene can still be detected and the distance determined. This maximum distance $D_{max}$ can for example be a value between 50 and 500 meter. Defining $F_P$ as being equal or lower than the above defined maximum pulse frequency, guarantees that when a given pulse is emitted the next pulse of the temporal sequence is only emitted when the previous pulse as reflected by an object located at the maximum distance $D_{max}$ is detected in the range-gating multi-pixel detector. This avoids a problem known as aliasing.

In embodiments, the pulse frequency $F_P$ of a pulse train 50, as illustrated on Fig.3, is typically in the kHz range, for example between 10 kHz and 500 kHz.

As mentioned above, the projector 100 further comprises a projector lens system 130. The projector lens system 130 is an optical system comprising one or more optical lenses configured for receiving the second laser beams forming the discrete spot pattern and for projecting this illuminating pattern 150 formed by the second laser beams towards the scene 99.

In prior art systems such as the LIDAR system described in WO2017/068199, the projector lens system is a complex, customized and expensive lens system. Indeed, a simple projector lens cannot be used as a single lens has generally no flat focal plane, well known as the Petzval field curvature. The consequence is that when the projector lens system is projecting the spot pattern to the scene, not all of the spots of the spot pattern are in focus at infinity. Therefore corrections need to be applied to correct for this non-flat focal plane.

The projector lens system 130 of the projector according to the disclosure is simplified when compared to the projector system of WO2017/068199 as the reshaping optical system 120 can be designed such that its focal plane is curved and coincides with the curved focal plane of the projector lens system 130. In this way a simple projector lens can be used to project the light pattern. Indeed as the reshaping optical system 120 provides for a curved focal plane, there are no for further correction lenses required. As a result, the length of the projector lens system 130 along the main optical axis Z is reduced. Hence this reduction can compensate or partly compensate for the increased length of the projector due to the addition of a mixing chamber. In embodiments, also the size of the projector lens, in a plane perpendicular to the X-Y plane is reduced, as will be further discussed below. How the projector lens system 130 according to the disclosure is simplified when compared to prior art projector lens systems will be further discussed below.

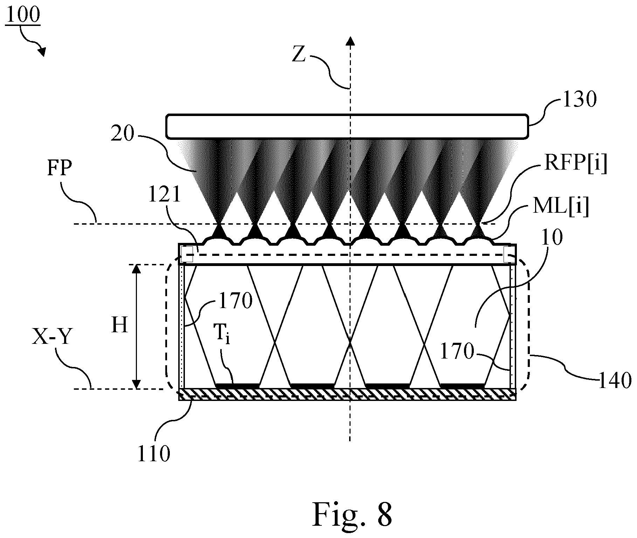

In embodiments, at least a portion of an inner wall of the mixing chamber is a reflective wall 170 for reflecting laser light such that laser light extending beyond the perimeter of the mixing chamber is reflected back into the mixing chamber, as schematically illustrated on Fig.5 and Fig.8.

Indeed, depending on the diverging angle of the light sources and the length H of the mixing chamber, light emitted by peripheral light sources of the array might hit the reflective walls and be reflected back in the mixing chamber. The reflective walls further helps to, following the mixing of the first laser beams, obtain a homogenous light distribution in plane perpendicular to the main optical axis, as will be further discussed in more detail.

For forming a reflective wall 170, the person skilled in the art can chose a material that is for example smooth and shiny so as to reflect laser light. According to an alternative claimed, at least a portion of an inner wall of the mixing chamber 140 comprises a mirror for reflecting the laser light.

In some embodiments, the reflective walls of the mixing chamber are configured for specular reflection, in contrast to diffuse reflection.

In further embodiments according to the disclosure, one or more optical laser light reflecting elements are located inside the mixing chamber for extending the travelling path of the first laser beams. In this way, the length H of the mixing chamber can be reduced while maintaining a sufficient mixing of the first laser beams.

*Micro-lens array*

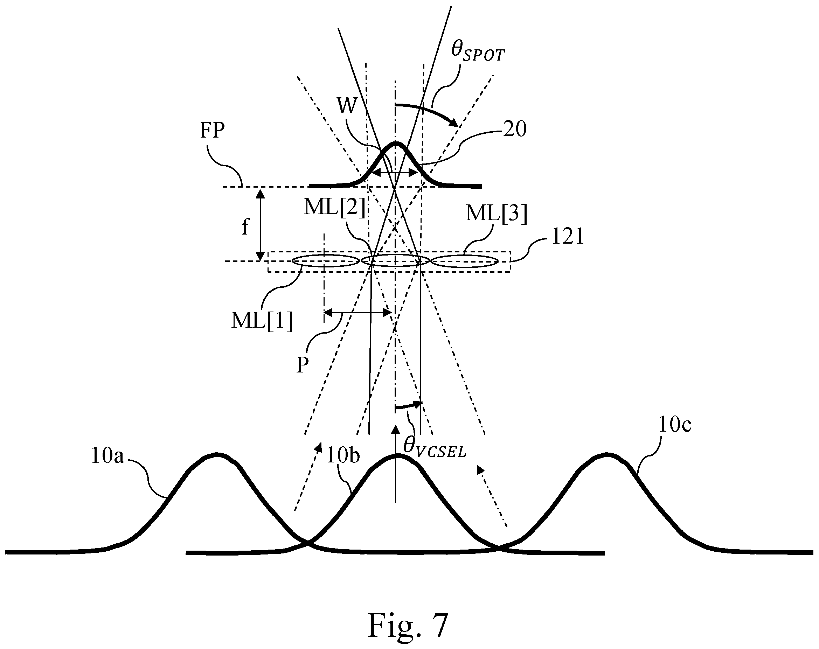

According to the invention, the reshaping optical system 120 comprises a first micro-lens array 121 comprising a plurality of micro-lenses ML[i]. The first micro-lens array 121 is also indicated with reference 121 on Fig. 14a to Fig.14h. For example, in Fig.7 a cross sectional view is shown illustrating three micro-lenses, ML[1], ML[2] and ML[3], of a first micro-lens array 121. Each micro-lens has its proper optical axis. Each of these plurality micro-lenses is configured for forming an associated second laser beam. Hence, the number of micro-lenses defines the number of second laser beams formed and hence the number of spots in the discrete spot pattern.

The micro-lens array, abbreviated as MLA, is understood to cover an array of miniaturized individual optical elements, for instance lenses, whereby the order of magnitude of the dimensions of the individual optical elements is generally in the micrometer to millimeter range.

As mentioned above, the number of spots in the discrete spot pattern is generally ranging from 10000 to 100000. In embodiments the number of discrete spots is for example about 20000 and hence in these embodiments the number of micro-lenses of the first micro-lens array is 20000.

In embodiments, the single element size of a micro-lens is about 79 micrometer and the projected spot formed by the micro-lens is about 15 micrometer.

In some embodiments the number of micro-lenses of the first micro-lens array is equal to the number of laser light sources, while in other embodiments the number of micro-lenses of the first micro-lens array is lower than the number of laser light sources such that the pulse intensity of the second beams is larger than the pulse intensity of the first beams.

Embodiments wherein the number of laser light sources is larger than the number of micro-lenses of the first MLA, has a number of advantages. Indeed, not only is the power per beam projected onto the scene increased, also negative effects of the failure of individual laser light sources is reduced.

In embodiments, each of the micro-lenses of the MLA has a hexagonal shape. With this type of micro-lens configurations an efficiency of about 95% can be reached, i.e. only 5% of laser light is lost when transforming from first to second laser beams.

The micro-lens array may be formed on a substrate using a photolithographic process, known in the art. Such processes are capable of fabricating micro-lens arrays wherein the micro-lenses have a diameter of the order of micrometers, for example diameters between 30 micrometer and 100 micrometer and a focal point in the range between 30 micrometer and 100 micrometer.

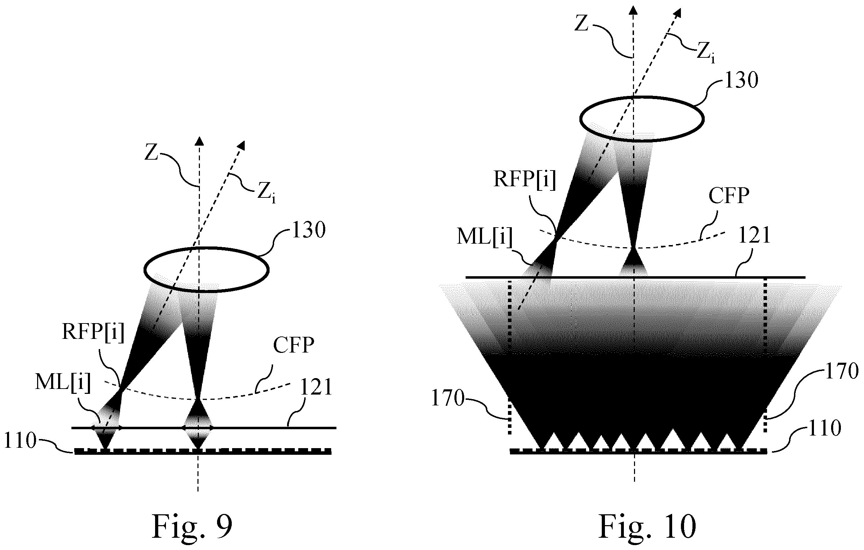

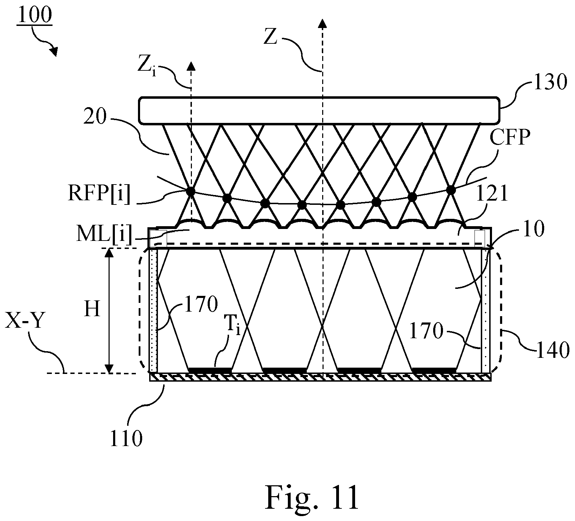

In some embodiments, as shown for example on Fig.11, the optical axes $Z_i$ of the individual micro-lenses ML[i] of the first micro-lens array 121 are parallel with the main optical axis Z. In other embodiments, shown for example on Fig.9 and Fig.10, the optical axis of a micro-lens ML[i] is not necessarily parallel with the main optical axis Z, as will be further discussed below.

In embodiments, the micro-lens array is also adapted to correct for the optical problem discussed above, namely the fact the focal plane of an optical lens is not flat but curved, known as the Petzval field curvature. Indeed, if the projector lens system has a curved focal plane and not a flat plane, the consequence is that the projected spots of the spot pattern are not all in focus at infinity and only part of the spots are in focus. Hence, not all spots have the maximum intensity per surface area. Generally, the central spots are in focus and the outer spots are out of focus. In prior art LIDAR systems, to remedy this problem, the projector lens system comprises besides an objective lens one or more additional correction lenses to correct for these optical aberrations. This makes the projector more expensive, larger and more complex.

In embodiments, as schematically illustrated on Fig.8, the first micro-lens array 121 is configured such that each micro-lens ML[i] comprises a focal point RFP[i] , more precisely a rear focal point, located on a flat plane FP, and wherein the flat plane FP is located between the micro-lens array 121 and the projector lens system 130.

In other embodiments according to the disclosure, the micro-lens array is configured such that each micro-lens comprises, a focal point, more precisely a rear focal point RFP[i], located on a curved plane CFP, instead of a flat plane as shown for example on Fig.8. The curved plane CFP is illustrated on Fig.9 to Fig.11. This curved plane CFP corresponds to a virtual image plane of the projector. More particularly, the curved plane corresponds to a curved focal plane, more precisely a curved front focal plane, of the projector lens system. In other words, the micro-lens array has a curved rear focal plane that is coinciding with the curved front focal plane of the projector lens system. In this way, by providing a micro-lens array with a curved focal plane, the projector lens system 130 of the projector 100 can be strongly simplified when compared to the projector lens system disclosed in for example WO2017/068199 that requires various additional correction lenses to correct for the Petzval curvature of the projector lens.

In embodiments the curved focal plane CFP corresponds to a curved focal plane of the projector lens system 130.

In the embodiment shown on Fig.11, as mentioned above, the optical axes $Z_i$ of the individual micro-lenses ML[i] are parallel with the main optical axis Z.

On the other hand, for the embodiments shown on Fig.9 and Fig.10, at least a portion of the micro-lenses ML[i] has an optical axis $Z_i$ that is not parallel with the main optical axis Z. Advantageously, for these embodiments the size of the projector lens system 130, i.e. a size in a plane perpendicular to the main optical axis Z, can be reduced when compared to embodiments where the optical axis $Z_i$ of each of the micro-lenses is parallel with the main optical axis. For example if the projector lens system 130 is formed by a standard projector lens then the diameter of the projector lens can be reduced.

*Semiconductor laser light sources*

In embodiments, the laser array 110 is formed by one or more VCSEL (vertical-cavity surface-emitting laser) chips wherein each VCSEL chip comprises an array of laser emitters. Each of these laser emitters is to be construed as an individual solid-state light source.. The VCSEL emitter is a type of semiconductor laser diode with laser beam emission perpendicular from a top surface of the VCSEL chip, the top surface forming the emission surface 111a. The emission surface of the VCSEL emitter is generally circular and has a diameter in the micrometer range, for example a diameter in the range between 10 micrometer to 25 micrometer. When an array of VCSEL emitters are formed, individual VCSEL emitters are separated by an inter-VCSEL spacing, which is typically a distance between 10 micrometer and 60 micrometer. By combining a plurality, for example hundreds to thousands of VCSEL emitters, a one-dimensional or a two-dimensional laser array is formed.

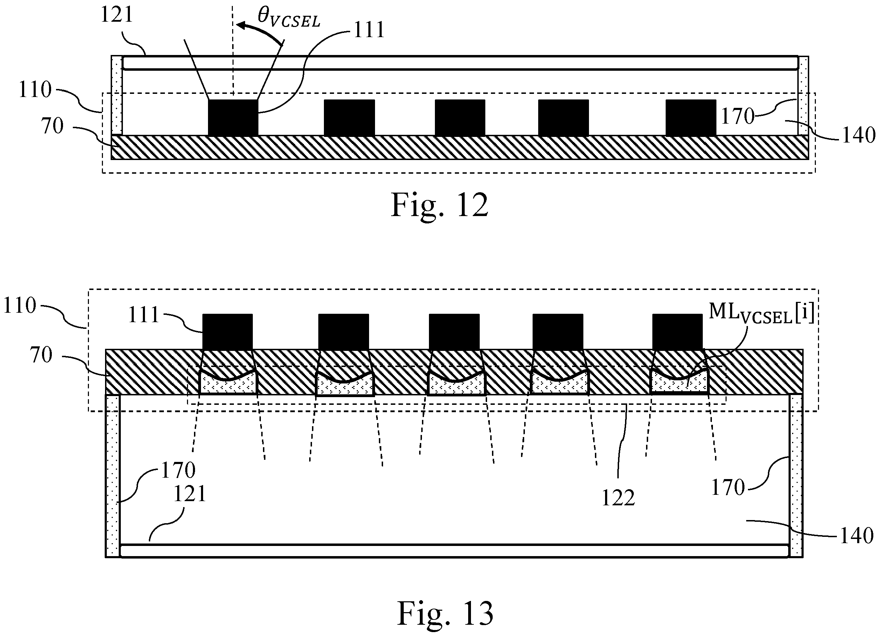

The laser light emitted from the emission surface of the VCSEL laser has a divergence angle $\theta_{VCSEL}$ , defined as half opening angle, which is generally in a range between 3° and 15°, i.e. the opening angle or full width of the laser beam is in range between 6° and 30°. Indeed, the laser light emitted by the laser light sources should be as small as possible to maintain discrete spots illuminating the scene. A divergence angle $\theta_{VCSEL}$ of a VCSEL emitter is schematically illustrated on Fig.12, and is shown as a half opening angle or half width of the laser beam. The value of a divergence angle or width of the laser beam is generally expressed as a $1/e^2$ value.

For selecting an adequate divergence angle $\theta_{VCSEL}$ a compromise is to be made. On the one hand the divergence angle should be as low as possible to obtain a small beam spot and on the other hand the divergence angle should be not too small in order the length H of the mixing chamber not to become too long. In embodiments, the VSCEL is selected such that the divergence angle $\theta_{VCSEL}$ is in a range between 3° and 15°. In embodiments, the divergence angle $\theta_{VCSEL}$ is 10°.

In particular embodiments according to the disclosure, solid-state laser light sources are grouped in the form of tiles such that for example a one-dimensional or a two-dimensional array of tiles is formed. A tile can be construed as a sub-array of solid-state laser light sources. Each sub-array forming a tile $T_i$ comprises a number $ST_i$ of solid-state laser light sources associated to the tile $T_i$ such that a total number ST of solid-state laser light sources of the laser array is expressed as:

$$ST = \sum_{i=1}^{NT} STi$$

with NT being the total number of tiles of the laser array.

An example of an implementation of such a tile is a VCSEL chip comprising a plurality of laser emitters, wherein each laser emitter corresponds to a solid-state laser light source. Hence, in these embodiments, the tiles $T_i$ are generally named VCSEL tiles. Each VCSEL tile can for example comprise between 500 and 2000 VCSEL light sources.

In embodiments, for forming a laser array 110, a plurality of VCSEL tiles can be ordered in rows and columns so as to form a two-dimensional array of tiles. For example a rectangular two-dimensional laser array 110 can be formed with N rows and M columns of VCSEL tiles, with N and M $\geq$ 2. The size of a tile is generally in the millimeter range. A tile can have a dimension of for example 2 mm $\times$ 2 mm, or 1 mm $\times$ 1 mm. These type of VCSEL tiles are commercially available. Remark that the tiles of the two-dimensional array 110 do not necessarily need to have the same shape or have the same amount of VCSEL sources.

The tiles of a VCSEL array formed by tiles are separated from each other by an inter-tile spacing. The inter-tile spacing is in the millimeter range. In embodiments, the inter-tile spacing is equal or larger than 0.3 millimeter, preferably equal or larger than 0.5 millimeter.

For each of the tiles, an inter-VCSEL spacing is equal or lower than 0.1 millimeter, preferably equal or lower than 0.05 millimeter.

In embodiments, the inter-VCSEL spacing is in a range between 10 micrometer and 30 micrometer.

The tiles of a VCSEL array comprising tiles, may be arranged on a flat or a curved surface.

In embodiments wherein the tiles have a rectangular shape and wherein the tiles are arranged for forming a regular VCSEL pattern, the inter-tile distances are the same for the entire two dimensional laser array 110.

In embodiments, the laser array 110 is a front-end VCSEL array as schematically illustrated on Fig.12. A front-end VCSEL array is an array wherein the laser light emitted by the VCSEL laser light source 111 is not traversing the substrate 70.

On Fig.12, a part of an embodiment of projector is shown wherein a micro-lens array 121 is located downstream of the laser array 110. This micro-lens array 121 corresponds to the first micro-lens array 121 discussed above that is configured for generating the second laser beams for forming the discrete spot pattern.

In other embodiments, the laser array 110 is a back-end VCSEL array as schematically illustrated on Fig.13. A back-end VCSEL array is an array wherein the laser light emitted by the VCSEL laser light source 111 is traversing the substrate 70. In preferred embodiments, the back-end VCSEL array comprises a second micro-lens array 122, also named VCSEL micro-lens array, comprising micro-lenses $ML_{VCSEL}[i]$ configured for reducing the divergence angle $\theta_{VCSEL}$ of each of the VCSEL's. Such a second micro-lens array is for example etched in the substrate 70 of the VCSEL array 110. In order to be able to use a back-end VCSEL array, the substrate 70 needs to be transparent for the laser light. Currently available back-end VCSEL arrays are for example transparent for laser light at 940 nanometer. As illustrated on Fig.13, the second micro-lens array comprising the micro-lenses $ML_{VCSEL}[i]$ can be construed as a second micro-lens array 122 of the projector, in addition to the first micro-lens array 121 located downstream of the second micro-lens array 122.

In further embodiments, the VCSEL array is of a multi-stack type.

*Mixing chamber*

As discussed above, the mixing chamber 140 is extending between the laser array 110 and the reshaping optical system 120 and has a length H measured along the main optical axis.

In Fig.17 and Fig.17b, two examples of embodiments of a mixing chamber 140 are schematically shown. The mixing chamber 140 extending along the main optical axis Z has to be construed as a three-dimensional hollow body. The mixing chamber 140 comprises an entrance face 160a for receiving the un-mixed laser light, an opposing exit face 160b for exiting the mixed laser light, and a circumferential side 140a for forming the hollow body. The circumferential side 140a of the mixing chamber is to be construed as a wall of the mixing chamber.

In some embodiments, as illustrated in Fig.17a, the mixing chamber 140 has the shape of a cuboid wherein four side walls of the cuboid are forming the circumferential side140a of the mixing chamber. In Fig.17b, an example of a mixing chamber 140 is shown having a shape of frustum wherein the entrance face 160a has a surface that is smaller than the surface of the exit face 160b. In Fig.17a and Fig.17b, the circumferential side 140a forming the mixing chamber is illustrated as hatched surfaces.

Typically, the laser array 110 is located at the entrance face of the mixing chamber and reshaping optical system, such as a first micro lens array 121, is located at the exit face of the mixing chamber.

In embodiments, the mixing chamber is configured for mechanically coupling the laser array to the entrance face of the mixing chamber and/or to mechanically couple the reshaping optical system to the exit face of the mixing chamber. In this way, the mixing chamber is also forming a support structure for the laser array and/or reshaping optical system.

In embodiments, the mixing chamber is configured for supporting other elements

In other words, the mixing chamber 140 is forming an area between the laser array generating the first laser beams and the reshaping optical system. This area can be construed as a cavity wherein the first laser beams are mixing.

As discussed above, in embodiments of projectors according to the disclosure, at least a portion of an inner wall of the mixing chamber 140, i.e. a portion of the inner side of the circumferential side 140a of the mixing chamber 140, comprises one or more reflective walls 170 for reflecting laser light.

In embodiments, the mixing chamber is made of for example a plastic material suitable for reflecting laser light.

In other embodiments, an inner portion of the circumferential side 140a is made of a first material and an outer portion of the circumferential side is made of a second material, different from the first material. The first material is then selected to be a laser light reflecting material such that the inner side of the circumferential side 140a is forming a reflective wall 170 for reflecting laser light.

The reflective wall of the mixing chamber results in a homogenous spot pattern, in other words also the spots at the periphery of the spot pattern will have the same intensity as spots located in the center portion of the spot pattern.

In some embodiments as illustrated on Fig.14a, the mixing chamber 140 can be empty, i.e. not containing any additional devices that interfere with the diverging first beams. In other embodiments as illustrated on Fig.14b to Fig.14f, the mixing chamber 140 can comprises additional elements, such as for example a second micro-lens array 122, a diffuser 145, a circulator 146, a Bragg volume grating 147 and/or a beam expander 148. These additional elements are typically elements that can influence the mixing of the first beams. These various embodiments comprising such additional elements will further be discussed below. In these embodiments comprising one or more of these additional elements, the mixing chamber is configured for supporting the additional elements and hence is also forming a support structure for these additional elements.

A major advantage of forming a mirror cavity, i.e. a mixing chamber having inner reflective walls, is that the light is confined and the irregularities typically present at the sides of a VCSEL tile or an array of tiles are absent. As a result of the mixing chamber, the spot pattern produced by the projection system is uniform such that spots at the periphery of the spot pattern have the same intensity as spots in a center region of the spot pattern.

An advantage of the mixing chamber is also that it protects the VCSEL array against contamination. In embodiments, the mixing chamber is airtight, such that turbulences, for instance of thermal origin, are avoided within the projector.

Advantageously, in embodiments, the mixing chamber can be filled with an inert gas to avoid aging or degradation of the components located within the mixing chamber.

In some embodiments, the reflective walls 170 are not perpendicular to the plane of the VCSEL array 110, as is the case for example when the mixing chamber 170 has the shape of a frustum as shown on Fig.17b. As such, the reflective walls 170 of the mirror cavity may be oriented to decrease the divergence angle of the beams, which, for instance, increases the range and/or precision of a LIDAR system using the present projector for illumination of a scene. The mirror cavity can fulfil this function in addition to other components of the projector and optionally it may replace the use of a second MLA 122, discussed below.

The mixing chamber needs to be sufficiently long such that laser light of the first laser beams become sufficiently mixed. Generally, a mixing plane $P_M$ parallel with the emission plane X-Y is defined as a plane wherein the light rays of the first laser beams are overlapping to the extent that the light becomes distributed homogenously. A homogenous light distribution is to be construed as a distribution where the light intensity across the mixing plane $P_M$ is essentially flat. The length H of the mixing chamber is generally defined such that the mixing plane $P_M$ is located at the end of the mixing chamber or at the entrance of the reshaping optical system 120. If the reshaping optical system comprises a micro-lens array the mixing plane can be located just in front of the micro-lens array.

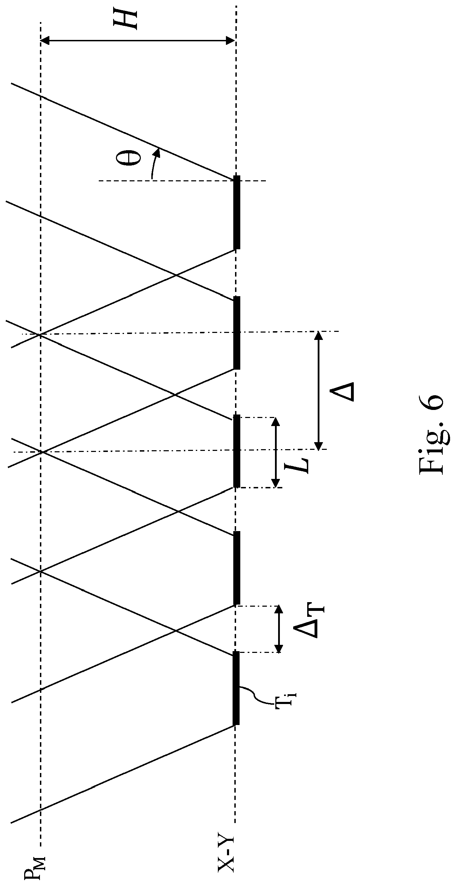

On the other hand, the length H of the mixing chamber 140 should also be as short as possible in order to maintain a compact LIDAR device. In Fig.6, the mixing plane $P_M$ is shown to be located at the end of the mixing chamber.

When tiles are used as laser sources, the length H of the mixing chamber measured along the main optical axis Z is defined such that, following propagation of the first laser beams through the mixing chamber, then for each tile at least a portion of its light rays is overlapping with light rays of adjacent tiles. Overlapping has to be construed as spatially overlapping. In embodiments at least 20% or more, preferably 40% or more, more preferably 60% or more, of the laser light of each tile is overlapping with light rays of adjacent tiles. In other embodiments, 100% of the laser light of each tile is overlapping with light rays adjacent tiles. An approach for defining an optimum distance for the length of the mixing chamber when using tiles is given below.

As schematically illustrated on Fig.6, a minimum length H for the mixing chamber 140 can be determined with the following formula:

$$ H \geq \frac{\Delta - (\frac{L}{2})}{\tan(\theta)} $$

with $\Delta$ being a distance between centres of two adjacent tiles, $\theta$ being the beam diverging angle of the VCSEL laser source, and L being a length of a side of the rectangular tile. For example if $\Delta$ = 2.5 mm, L = 2 mm and $\theta$=10°, then H $\geq$ 8.5 mm. On Fig. 3, an embodiment is shown where the light sources are tiles of VCSEL arrays.

In other embodiments, where no tiles are used but where the light sources are for example formed by a plurality of individual VCSELs forming a regular matrix, the above mentioned formula can be applied to determine the minimum distance H required for the mixing chamber 140. For these embodiments where no tiles are used, the distance $\Delta$ is this case the distance between centres of two adjacent VCSEL laser sources, e.g. 50 micrometer, and L is then the diameter of the circular emission surface of an individual VCSEL, e.g. 15 micrometer. If no tiles are used, the minimum distance required for H to have sufficient spatial overlap between the first laser beams is much shorter.

The formation of a second laser beam 20 comprising light rays from multiple first laser beams is schematically illustrated on Fig.7. In this illustrative example, the micro-lens ML[2] receives portions of light rays from the first laser beams 10a, 10b and 10c. The micro-lens ML[2] has a focal distance f and focusses the light rays transmitted through the micro lens ML[2] in the focal plane FP so as to form a second laser beam 20 composed of light rays portions of the first laser beams 10a, 10b and 10c. In the focal plane FP of the micro-lens ML[2] an image of a spot is observed corresponding to the composed second laser beam 20 having a beam spot width W and a divergence $\theta_{SPOT}$. As illustrated on Fig.7, the width W of the second laser beam 20 in the focal plane 20 can be found with the following formula: $\tan(\theta_{VCSEL})$ = W/(2 x f), with $\theta_{VCSEL}$ being the divergence angle of the first laser beams 10a,10b,10c. The divergence angle $\theta_{SPOT}$ of the second laser beam 20 can be found with the following formula: $\tan(\theta_{SPOT})$ = ((W+P)/(2 x f)), with P being the distance between the centre of two adjacent micro-lenses. In Fig.7, only a schematic drawing of the principle of forming a second laser beam based on a plurality of first laser beams is shown, in practice, the number of overlapping first laser beams for forming the second laser beam is generally larger.

In Fig.8, a cross-sectional view of an embodiment of a projector 100 according to the disclosure is shown wherein the projector comprises a laser array 110, for example a two-dimensional laser array, formed by a plurality of VCSEL tiles T[i]. Each VCSEL tile comprises a plurality of VCSEL lasers producing the first laser beams 10. In this example, multiple first laser beams 10 originating from different tiles T[i] are being mixed while propagating through the mixing chamber 140. The micro-lens array 121 finally forms the second laser beams by intercepting the overlapping light rays and refocussing them to the focal plane FP, which is a common focal plane for each of the micro-lenses of the micro-lens array. The focussing of the second laser beams to a focal plane FP is schematically illustrated on Fig.8.

As stated above, a preferred method of obtaining a sufficiently large VCSEL array is to combine a number of VCSEL tiles into a larger array. Smaller VCSEL tiles have a higher yield than larger tiles, which results in a more efficient manufacturing process and lower associated cost. Upon assembly of such tiles into a VCSEL array, the resulting inter-tile distance will generally be larger than the inter-VCSEL distance within a tile. These "seams" lead to the presence of less illuminated bands in the field of view, FOV, of the projector. It is clear that the distance h between the VCSEL array and first MLA can be chosen such that the beams of adjacent tiles mix, leading to a more homogeneous power field incident to first MLA 110 and a more uniform illumination of the scene. In this way, the cost of the projector can be reduced and/or its size can be increased without sacrificing the homogeneity of the projected pattern.

An additional effect of the possibility to use smaller tiles and larger inter-tile distances is the availability of a larger power budget per tile, and hence per VCSEL, without running into thermal constraints. This increased power per VCSEL increases the power per beam projected onto the scene when compared to the beams generated by individual VCSELs, which, for instance, increases the amount of laser light (i.e., the number of photons) reflected back to the detector of a LIDAR system. Since the range and/or precision of a LIDAR system are strongly dependent on the Poisson noise in the measurement, and as this Poisson noise decreases with an increasing amount of back-reflected photons, said disparity and the resulting increased power per beam increases for instance the range and/or precision of a LIDAR system using the present projector for illumination of a scene.

*Projector with two micro-lens arrays*

In embodiments of the present disclosure as shown on Fig.14b, the projector comprises a second micro-lens array 122 for decreasing a divergence angle of the first laser beams emitted by the solid-state laser light sources (111). The second micro-lens array is generally arranged between the laser array 110 and the first micro-lens array 121.

In embodiments, the second micro-lens array is configured for limiting the divergence angle of the firstlaser beams, for example limiting to a maximum divergence angle of 5°. On the other hand, as the purpose of the mixing chamber is to have the first laser beams overlap, a trade-off is to be made between limiting the divergence angle to a given maximum value and the amount of mixing that is required for obtaining a homogenous light distribution on the second micro-lens array, in order to generate second laser beams with a homogenous irradiance for all second laser beams.

The projector embodiments with two micro-lens arrays retain all characteristics of the embodiments discussed above comprising only a first micro-lens array 121, illustrated on Fig.14a. The second micro-lens array 122 is located between the emitting side of the VCSEL array 110 and the first micro-lens array 121. Preferably, the second MLA 122 contains a number of micro-lenses equal to or less than the number of VCSELs, i.e. the total number of laser emitters, in the VCSEL array 110. Preferably, the second MLA 122 is designed to decrease the divergence of the beams emitted by the individual lasers in the VCSEL array 110.

In some embodiments wherein the laser array is composed of a number of VCSEL chips, wherein each VCSEL chip comprises a plurality of laser emitters. The laser emitter of the VCSEL chip is to be construed as a solid-state laser light source and the VCSEL chip is an example of an implementation of the VCSEL tile discussed above.

In embodiments wherein the laser array 110 is composed of a number of VCSEL chips, wherein each VCSEL chip comprises a plurality of laser emitters, a number of micro-lenses in the second micro-lens array 122 is equal or smaller than a total number of emitters of the laser array. The total number of emitters is the sum of all emitters in each of the VCSEL chips of the laser array.

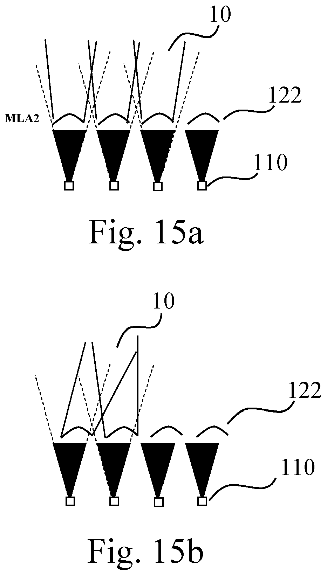

In some embodiments wherein the micro-lenses of the second MLA are aligned with the optical axes of the respective VCSEL, which optical axes may be parallel in the case of a strictly planar VCSEL array, the second MLA 122 decreases the divergence of the beams emitted by the VCSEL array without breaking the beams. This is schematically illustrated on Fig.15a. The resulting decrease in divergence of the laser beams increases the irradiance of the first beams incident on the first MLA 121 and hence also the second beams received by the projector lens 130 have an increased irradiance. As a result, the angular irradiance of the beams projected onto a scene by the projector is reduced, which, for instance, increases the range and/or precision of a LIDAR system using the present projector for illumination of a scene.

In embodiments, the distance between second MLA 122 and first MLA 121 can be varied and such a distance variation will impact the amount of mixing occurring between the laser beams before they reach first MLA 121.

In alternative embodiments wherein the micro-lenses of the second MLA are not perfectly aligned with the respective optical axes of the individual VCSELs, the second MLA 122 may decrease the divergence of the beams emitted by the VCSEL array 110 while also breaking the beams. In other words, there is a diffuser effect, increasing the angular mixing of the first beams. This is schematically illustrated on Fig.15b. This diffuser effect increases the mixing of the beams and hence the homogeneity of the field incident on first MLA 121. This can lead to a more homogeneous spot pattern projected on the scene and/or make it possible to reduce the distance between first MLA 121 and the VCSEL array 110 without negatively impacting the homogeneity of the spot pattern. In the case of non-perfect alignment, the presence of second MLA 122 can for instance increase both the accuracy and the precision/range of a LIDAR system using the present projector.

As discussed above, for embodiments wherein the laser array 110 is a back-end VCSEL array, as schematically illustrated on Fig. 13, such a second micro-lens array 122 is for example etched in the substrate 70 of the VCSEL array 110 and configured for reducing the divergence angle $\theta_{VCSEL}$ of each of the VCSEL's.

In some embodiments, instead of using a second MLA for reducing the divergence angle of the laser beams, one or more prisms are used for reducing the divergence angle of the laser beams.

*Projector with a diffuser*

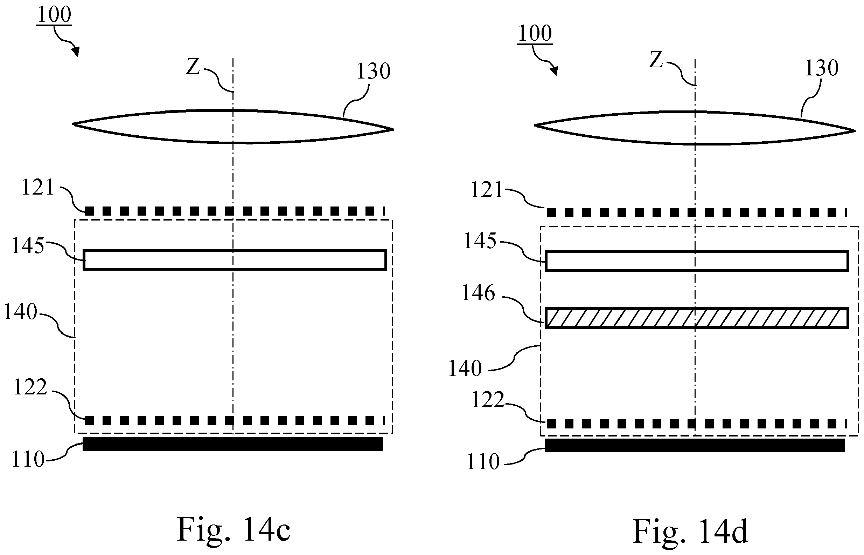

A further example of a solid-state projector according to the disclosure is schematically shown in Fig.14c. For the sake of clarity and without loss of generality, this embodiment as illustrated retains all characteristics of the embodiment illustrated in Fig.14b, and additionally comprises a separate diffuser 145 between the first MLA 121 and second MLA 122. This shall not be construed to exclude embodiments lacking a second MLA 120.

As illustrated on Fig.14c, the diffuser 145 is comprised within the mixing chamber 140 and preferably, in these embodiments, the mixing chamber 140 is configured for supporting the diffuser 145.

In some embodiments comprising a second MLA 122, the diffuser 145 can be located closer to the second MLA 122, while in other embodiments as schematically illustrated on Fig.14c, the diffuser 145 can be located further away from the second MLA 122.

In some embodiments, the diffuser is attached to the second MLA 122. In embodiments, the diffuser or the diffuser functionality is made integral part of the second MLA 122.

The diffuser is an optical component that scatters light by diffraction and refraction with the objective to evenly distribute light coming from the VCSEL source. It homogenizes the light, so as to have a radiance that is independent of angle and/or position, and hence the light incident on the first MLA is of a more uniform character to create a homogenous spot pattern post the first MLA.

A diffuser typically is made out of patterned surface between two materials with different optical refractive index at the wavelength of interest. Preferably a high index contrast and easily manufacturable, e.g. moldable, material is used. For example, the following non-limiting material combinations can be used: glass/air, plastic/air, AlGaAs/air, epoxy/air, cured liquid crystal in mold, epoxy/epoxy, plastic/plastic. In embodiments, a colloidal suspension is used such as for example the combination: glass/liquid.

Its operating principle is based on diffusing light based on the refractive and diffractive characteristics at the edges of the different optical material. This interface typically is non-periodic so as to avoid a fixed pattern and hence the diffusion is semi-random, preferably independent of polarizations and sufficient.

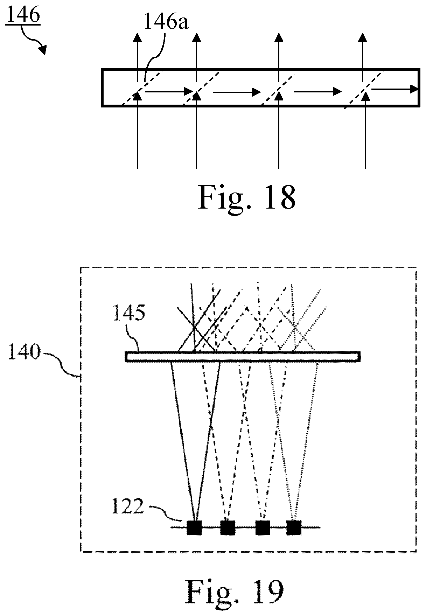

In Fig. 19, an embodiment is shown wherein laser light originating from the second MLA 122 is crossing the diffuser 145 and the mixing of the laser light resulting from crossing the diffuser is schematically illustrated.

The diffuser 145 increases angular beam mixing, leading to a more homogeneous field incident on the first MLA 121. The diffuser thus enables a possible reduction of the distance between the first MLA 121 and the second MLA 122 without negatively impacting the homogeneity of the spot pattern projected by the projector. However, the increase in angular beam mixing will lead to a decrease in angular irradiance of the projector.

Since there exist small variations in the wavelengths emitted by the individual VCSELs, the diffuser 145 not only provides angular mixing of the beams, but also wavelength mixing. The wavelength mixing increases the wavelength spectrum of the projected spot pattern, thereby reducing its coherence. This reduction in coherence reduces the presence of a speckle pattern in the projection, thereby for instance increasing the accuracy of a LIDAR system using the present projector for the illumination of a scene. However, a broad wavelength spectrum has a detrimental effect on the range and/or precision of such a LIDAR instrument due to the necessary presence of narrow band filters on the detector side of the LIDAR.

The person skilled in the art will appreciate that the diffuser needs to be tuned according to the properties of the first MLA 121, the second MLA 122, if present, and the VCSELs of the VCSEL array 110 to achieve a balance between the angular irradiance of the projected spot pattern, the homogeneity of the projected spot pattern, the wavelength spectrum of the projected spot pattern and the thickness of the optical stack.

*Projector with a circulator*

A further embodiment of a projector according to the disclosure is shown in Fig.14d. For the sake of clarity and without loss of generality, this embodiment as illustrated retains all characteristics of the embodiment from Fig.14c, and additionally comprises an optical circulator 146. This shall not be construed to exclude embodiments lacking a second MLA 122 and/or a diffuser 145.

In some embodiments, mixing with the diffuser 145 as discussed above is not sufficient, and another optical element, namely the circulator 146 is used, preferably in combination with the diffuser discussed above.

As illustrated on Fig.14d, the circulator 146 is comprised within the mixing chamber 140 and preferably, in an embodiment comprising a circulator, the mixing chamber 140 is configured for supporting the circulator 146.

The circulator 146 has the purpose of providing spatial beam mixing. Preferably, the circulator is placed between the VCSEL array 110 and the diffuser 145, or for embodiments comprising a second MLA 122 between the second MLA 122 and the diffuser 145. In this location, the beam angle is usually smaller than it is between the diffuser 145 and the first MLA 121. This may lead to more spatial mixing and enables the use of a thinner circulator to obtain the same efficiency. The spatial mixing provided leads to a more homogeneous field incident on first MLA 121 and hence to a more homogeneous spot pattern projected on a scene, which, for instance, increases the accuracy of a LIDAR system using the present projector for the illumination of a scene. As a result of the enhanced mixing using a diffuser and a circulator, the resulting laser light is more incoherent such that speckle noise is further reduced.

The circulator increases the spatial mixing of the VCSEL rays by the principle of partially diffracting/bending, preferably by 90°, e.g. through a kind of semi-transparent/semi-reflective element and partially passing the incident vcsel rays. The circulator by its operational principle propagates partially vcsel rays from the place of incidence to a next more distant location where it partially exits the circulator. This increases further the spatial mixing of the vcsel beams hence improving the homogeneity of the light incident to MLA1

A circulator typically is made out of for example plastic or glass and has a number of semi-reflective/semi-transparent mirror components included in the optical path. There is a fixed distribution between light transmitted and light reflected. Its operating principle is based on partially reflecting incident light rays and partially passing them through. The type of reflection depends on the material choice: e.g. frustrated total internal reflection, partial reflection due to two optical media, metallic reflection, polarizing beam splitter. The ratio that passes and is reflected is determined by the degree of transparency of the reflective component which is placed in the optical path of the light rays.

It is preferable and advantageous to coat the bottom and top layer with an anti-reflective coating for the wavelength spectrum of use.

In Fig.18, an example of an embodiment of a circulator 146 is shown. The circulator 146 shown comprises transparent mirrors 146a, i.e. mirrors that are transparent to a certain amount. For example transparent between 20% and 80%, for example 50% transparent. In Fig. 18, four transparent mirrors 146a are schematically shown and are illustrated with a dotted slash. Incoming laser light is partly going through the transparent mirror and is partly reflected in a direction perpendicular to the incoming laser light. The laser light that is reflected by a first transparent mirror will again be at least partly be reflected by an adjacent transparent mirror and hence be directed again as the original incoming laser light. In this way, laser light becomes spatially mixed. In Fig.18, incoming laser light, reflected laser light and transmitted laser light are schematically illustrated with black arrows.

*Projector with a Bragg volume grating*

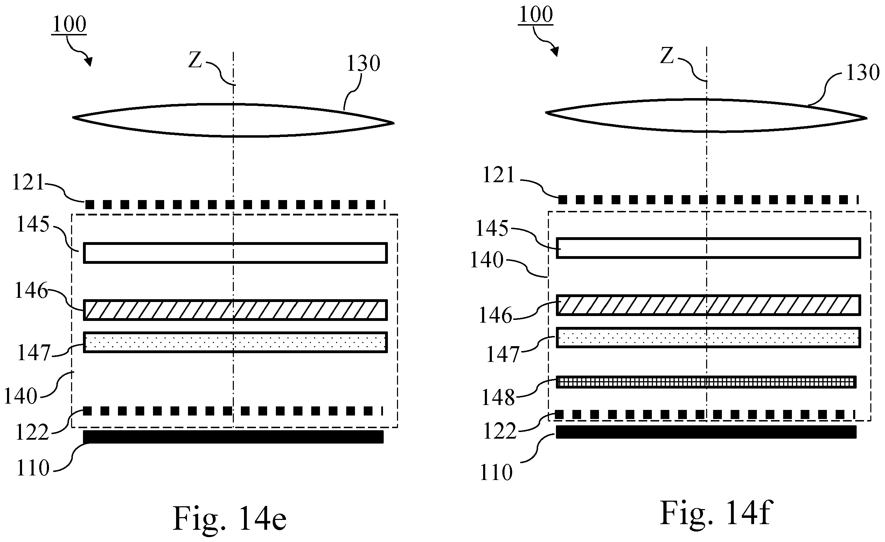

A further embodiment of a projector according to the disclosure is shown in Fig.14e. For the sake of clarity and without loss of generality, this embodiment as illustrated retains all characteristics of the embodiment from Fig.14d, and additionally comprises a Bragg volume grating 147. This shall not be construed to exclude embodiments lacking a second MLA 122 and/or a diffuser 145 and/or a circulator 145.

The Bragg volume grating is a device configured for reducing a wavelength spread of the first laser beams.

Preferably, the Bragg volume grating 147 is placed between the VCSEL array 110 and the diffuser 145. The Bragg volume grating 150 is for example made of glass.

The Bragg volume grating 147 diffracts a part of the emitted light back to the VCSEL array 110, also named self-imaging, thereby causing locking of the VCSEL wavelength through the phenomenon of optical injection locking. Typically, the spread on the wavelengths emitted by the individual VCSELs in a VCSEL array is 2-3 nm. With the addition of the Bragg volume grating 147, this spread may typically be reduced by one order of magnitude, to 0.2-0.3 nm.

Preferably, the Bragg volume grating is designed such that it does not lead to a loss of optical power, the full power of the VCSEL should be emitted in the smaller wavelength spectrum.

The reduction in wavelength spread enables for instance the use of a more narrow-banded filter in the detector of a LIDAR system using the present projector for the illumination of a scene, thereby increasing the signal to noise ratio of the detector and consequently increasing the range and/or precision of said LIDAR system. A possible side-effect of the narrower bandwidth of the emitted beams is an increased generation of speckle by the projector.

The Bragg volume grating 147 makes the wavelength of the beams emitted by the individual VCSELs less dependent on the temperature of and the current going through the VCSELs. As a result, the dynamic wavelength shift during a beam pulse is reduced. This reduction enables for instance the use of a more narrow-banded filter in the detector of a LIDAR system using the present projector for the illumination of a scene, thereby increasing the range and/or precision of said LIDAR system.

Preferably, the Bragg volume grating 147 is designed such that it can spatially sweep the wavelength of the VCSEL array to match it with the wavelength blue-shift of the narrow-band filter at the detector side of the LIDAR system. Alternatively, this matching can be performed by sorting the VCSEL tiles as a function of wavelength and placing them at the correct position in the VCSEL array for matching with the narrow-band filter.

Preferably, the Bragg volume grating 147 reduces the divergence of the emitted beams. Such a decrease in divergence increases the angular irradiance of the projector system, which, for instance, increases the range and/or precision of a LIDAR system using the present projector for illumination of a scene. A possible side-effect of this decrease in divergence is a decrease in angular mixing between the beams incident on first MLA 121 and a corresponding decrease in homogeneity of the spot pattern projected by the projector.

As illustrated on Fig.14e, the Bragg volume grating 147 is comprised within the mixing chamber 140 and preferably, in these embodiments, the mixing chamber 140 is configured for supporting the Bragg volume grating 147.

*Projector with beam expander*

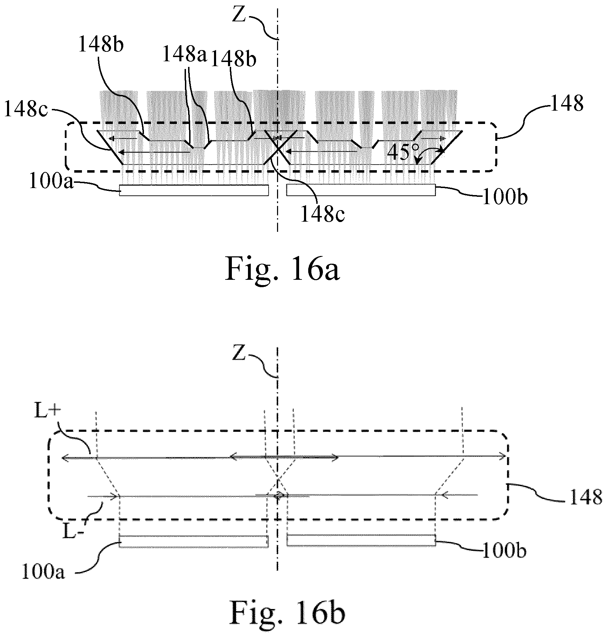

A further embodiment of a projector according to the disclosure is shown in Fig.14f comprising a beam expander 148. The beam expander 148 is a device configured for increasing a homogeneity of a light distribution incident on the first micro-lens array. The use of the beam expander 148 is especially useful when the laser array 110 is composed of tiles forming a plurality of subarrays, as discussed above. Detailed embodiments of beam expanders 148 with further implementation details are being illustrated in Figures 16a and 16b.

For the sake of clarity and without loss of generality, the embodiment as illustrated on Fig. 14f retains all characteristics of the embodiment from Fig.14e, and additionally comprises a beam expander 148. This shall however not be construed to exclude embodiments lacking a second MLA 122 and/or a diffuser 145 and/or circulator 146 and/or Bragg volume grating 147.

A beam expander is to be construed as an optical element that bends/diffracts laser light towards spatially different locations by placing, amongst others, semi-transparent components in the optical path. Those components partially pass the incident laser light and partially bend it over 90° to have it propagated to another location upon which it leaves the optical component.

The objective of the beam expander is to create a more homogenous light field incident on the first MLA 121, more specifically it aims to create a levelled radiance at the interconnection of the VCSEL tiles that typically due to the distance between two tiles shows a lower radiance.

A beam expander typically is made out of for example plastic and/or glass and acts upon semi-transparent, semi-reflective, components placed in the optical path, or can be realized by a cascade of positive / negative lenses.

Preferably, the beam expander 148 is placed between the VCSEL array 110 and first MLA 121, or, when a Bragg volume grating 147 is present, between the VCSEL array 110 and the Bragg volume grating 147. As mentioned above, the beam expander 148 has the purpose of increasing illumination in the inter-tile areas, leading to a more homogeneous power field incident to first MLA 121 and as a result a more uniform illumination of the scene, which, for instance, increases the accuracy of a LIDAR system using the present projector for the illumination of a scene. In this way, the size of the VCSEL tiles and hence the price of the projector can be decreased and/or the number of VCSEL tiles and hence the size of the projector can be increased without sacrificing the homogeneity of the projected pattern.

Without loss of generality, Figures 16a and 16b each illustrate the principle of operation of the beam expander with reference to two tiles 100a, 100b, whereby the beam expanders 148 operate to fill the low-intensity gap that would otherwise appear due to the presence of a seam between the tiles. The skilled person will appreciate that these principles can be applied to any number of tiles, including tiles arranged in a two-dimensional array, in which case they operate to fill up the low-intensity zones created by the resulting grid of seams.

In embodiments as shown on Fig.16a, the beam expander 148 comprises a plurality of angled mirrors 148a, 148b, 148c positioned at an angle of 45° relative to the tile surface. When laser light originating from the tiles 100a, 100b reaches the mirrors indicated by reference 148a and 148b, the laser light is reflected over an angle of 45° and hence is travelling parallel to the tiles until it reaches a further mirror indicated by reference 148c. This further mirror 148c will then again reflect the light over an angle of 45° such that the laser light is again perpendicular to the tiles 100a, 100b. The horizontal arrows on Fig.16a indicate laser light after reflection through the mirrors indicated by reference 148a and 148b. As the mirrors indicated with reference 148c, are located in the area between two tiles, laser light will also reach the area between two tiles and hence no low-intensity gap in between tiles will occur.

In other embodiments, the beam expander comprises for each tile, a pair of a negative L- and a positive lens L+ positioned parallel to the tile surface, as shown in Fig.16b. In this way laser light is first defocussed with the negative lens and in this way reaches the inter-tile area. Thereafter the laser light is refocussed with the positive lens such that the laser light is again propagating along the main axis Z.

As illustrated on Fig.14f, the beam expander 148 is comprised within the mixing chamber 140 and preferably, in these embodiments comprising a beam expander 148, the mixing chamber 140 is configured for supporting the beam expander.

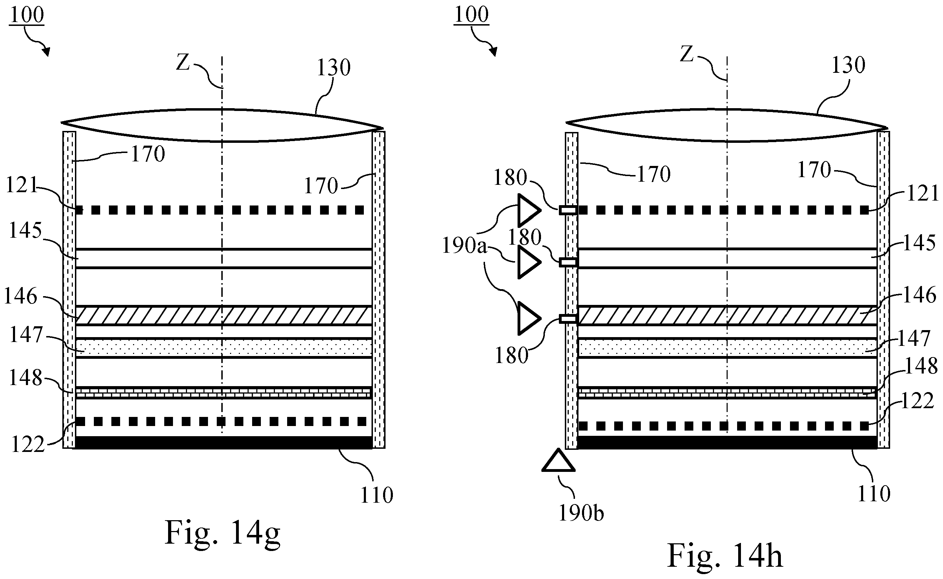

In Fig.14g and Fig.14h further embodiments of projectors 100 are shown wherein the mixing chamber comprises reflective inner walls 170. In this way, a mirror cavity is formed. In the examples shown on Fig.14g and Fig.14h, the projector 100 comprises the components of the projector shown in Fig.14f, however in other embodiments, the projector can comprises the components of any of the projectors shown in Fig. 14a to Fig. 14f or any combination thereof.

*Mixing chamber with inspection holes*

In embodiments, the mixing chamber 140, more specifically the circumferential side 140a, comprises inspection openings for inspecting the operation of the projector. In Fig.14h, an example of an embodiment is shown wherein the circumferential side of the mixing chamber is made of reflection walls 170 and wherein inspection openings 180 are provided through the reflection walls 170. In this way, the operation of the projector can be monitored while in use. Preferably, these inspection openings 180 are located at different heights, for example at the location of specific optical components or in between different optical components. Without loss of generality, Figure 14h shows an example of three possible locations for such inspection openings 180.

When inspection openings are provided, some light in the mirror cavity will propagate towards the inspection openings 180 and as a result, the light emitted by the projector system may be analyzed at different levels of the optical stack through the openings 180. This analysis may for example happen using optical photodiodes 190a positioned at the inspection opening or using a camera 190b mounted on the PCB outside the optical cavity.

The inspection openings 180 confer the advantage of operando monitoring the quality of the emitted beams, where the obtained information may be used to assess the performance of individual components in the optical stack, to diagnose a malfunction, to schedule maintenance or part replacement or to provide feedback for the control system.

*Range gating detection technique, general*

As discussed above, in some embodiments of LIDAR systems, the multi-pixel detector for detecting the reflected laser light is applying a range-gating detection technique in combination with pulsed laser beams for determining distances to objects of the scene. This is a technique distinct from the direct time of flight technique. A range gating technique has to be construed as a detection technique wherein the reflected laser light is detected and accumulated as function of time. The detection and accumulation is generally performed in time windows and the range gating technique uses at least two consecutive time windows. As discussed above, processing means calculate the distances to one or more objects of the scene based on the accumulated reflected laser light obtained with the range-gating multi-pixel detector.

When applying a DToF technique in combination with pulsed laser beams, pulse widths of a few nanoseconds are used, i.e. the pulse widths are much shorter than the TOF to be measured. On the other hand, when applying a range gating technique, the pulse width used is much longer and is generally equal to or of the order of the TOF to be measured. For example, if an object is at a distance of 100 meter, it takes about 666 nanoseconds for the light to travel back and forth. The use of broader pulses allows the detector to accumulate charges during a longer time interval. Although the solid-state laser beams provide less power than conventional laser beams, a sufficient signal to noise ratio can be obtained with the CMOS-based detector using a range gating technique when applying a sufficient pulse repetition.

An example of a range gating technique is known from WO2017/068199. A multi-pixel detector for a range gating technique comprises a plurality of pixels configured to generate, for each spot of reflected laser light detected, exposure values by accumulating, for all the pulses of the temporal sequence of pulses of the laser beam, a first amount of electrical charge representative of a first amount of light reflected by the scene during a first predetermined time window and a second electrical charge representative of a second amount of light reflected by the scene during a second predetermined time window. The second predetermined time window is subsequentially occurring after the first predetermined time window. The distance to an object of the scene is calculated based on the first and second amount of electrical charges. In embodiments, the first predetermined time window and the second predetermined time window are of substantially equal duration and equal to the pulse width Pw of the pulses forming the illuminating pattern.

The use of the projector according to the disclosure is however not limited to a specific range gating technique, and hence is not limited to the specific range gating technique disclosed in WO2017/068199, indeed other range gating techniques using the principle of detecting and accumulating reflected laser light as function of time can be applied as well.

*Range gating detection technique, distance accuracy*

In embodiments wherein the laser light is pulsed, the illumination of a scene with the temporal sequence of pulses forming a spot pattern, the accumulation of reflected laser light, the readout of the charges and the calculation of a distance based on the accumulated charges is generally named a frame or a frame measurement. The spatial accuracy that can be reached with the LIDAR system applying a range-gating detection technique generally depends on the precision of a single frame measurement and the number of frames taken for determining an average object distance. Indeed, when performing multiple frame measurements, there is a spread on the measured distances from frame to frame. The error of a single frame measurement is generally named the temporal error, being the sigma value $\sigma$ of the measurement distribution. Therefore, multiple frames are always taken and an average object distance is determined. In this way, the error on the average object distance value is reduced with a factor $1/\sqrt{N_F}$ when compared to the error of a single frame measurement, with $N_F$ being the number of frames. For a perfectly calibrated LIDAR device, the calculated average distance, obtained from the multiple frames, is equal to the real distance within a confidence interval determined by the standard deviation $$\sigma_{avg} = \sigma/\sqrt{N_F}.$$

An acceptable spatial accuracy for these systems, e.g. for automotive applications, is for example a four sigma confidence interval, i.e. 4 x $\sigma_{avg}$, that is in the range between 0.1 % and 0.5% of the average distance value. When the average distance determined, after a number of frame measurements, is equal to for example 100 m and if the four sigma confidential interval obtained is equal to 0.2%, then the average object distance of 100 m as determined is, with a 99,99 % probability, equal to the real distance within an interval of +/-20 cm.

The disclosure is, at least in part, based on the inventors observation that despite a strong effort for reducing or correcting the detected signal from noise contributions, such as background noise from ambient light, pixel noise or noise resulting from for example TOF response times, the obtained spatial accuracy, with A LIDAR system as described in WO2017/068199, is less than what would theoretically be expected, i.e. finding for example an average determined distance that is equal to the real distance within a 99,99% confidence interval. Even after performing the distance measurement a sufficient multiple number of times to reduce the Poisson noise, it was observed that the average distance measured was still different from the real distance with an amount much larger than the expected spatial accuracy. The inventors analysis of multiple tests performed with a solid-state LIDAR system as described in WO2017/068199, has led to the inventors insight that, after calibration for known systematic noise elements, the remaining major noise contribution when using a LIDAR system producing spatially separated pulses of coherent laser light combined with a range-gating detecting technique is speckle related noise.

The speckle noise is a semi-random noise caused by an interference effect at the intersection with the object that reflects the laser light, and which propagates through the reflected laser light and is further accumulated in the detector, adding noise to the integrated charge in the range-gating detector. The speckle causes the reflection of the laser light to be uneven and depending on the material structure of the object. The speckle pattern is also varying as function of time and hence speckle varies over the pulses and within the pulse width of the pulsed laser beams. When applying a range gating technique wherein reflected laser light is accumulated in multiple detection time windows corresponding to the temporal sequence of projected pulses, it is observed that the effect of the speckle can vary from one detection time window to the other and differing over the multiple pixels or charge wells integrating the charge during the detection time window. As discussed for example in WO2017/068199, when applying a range-gating technique, accumulated counts over a sequence of pulses are generally detected in a first time window and in a succeeding second time window. To determine a distance, a ratio is determined between the accumulated counts detected in the first time window and the sum of the accumulated counts detected in the first time window with the accumulated counts detected in the second time window. Hence when taking such a ratio of counts, and as the speckle is varying from time window to time window, non-calibratable deviations occur between the real distance and the measured distance. Hence, this results in a poor spatial accuracy.

The dominating speckle noise contribution is held to be a consequence of the characteristics of the laser light and the combination of illuminating the scene with a discrete spot pattern of laser light wherein each spot is formed by a sequence of pulses of coherent laser light and this combined with the use of a range-gating detector that is integrating charges over a time period of the order of the TOF. In contrast, with DToF LIDAR systems, very short pulses in the nanosecond range are used and there is no integration of charges as is the case with the range gating technique. Therefore speckle noise is not observed as a major problem for these type of DToF systems. In view of the compactness of the solid-state LIDAR system, solving the random speckle problem for such a system based on pattern illumination with discrete spots of laser light and based on the range gating technique is challenging.

Advantageously, with the novel projector according to the present disclosure, wherein second laser beams are formed by mixing first laser beams, the second laser beams are essentially emitting incoherent light. As a result, the projector projecting a spot pattern of laser light formed by discrete pulsed laser beams can be used as part of LIDAR system comprising a range-gating detection technique. Indeed, due to the mixing of the laser beams by the projector before generating the discrete spot pattern, the speckle noise discussed above, is eliminated and the spatial accuracy obtained with the LIDAR system according to the disclosure falls within the theoretical expectations. In other words, when taking multiple frames and determining an average object distance value, then within the standard deviation $\sigma_{avg}$ being equal to $\sigma / \sqrt{N_F}$ , with $N_F$ being the number of frames and $\sigma$ being the standard deviation of a single frame measurement, the average object distance value obtained is equal to the real distance within the standard deviation $\sigma_{avg}$. Hence by taking an adequate number of frames, with a 99.99% probability, the average distance determined is equal to the real distance within an interval around the average value of for example +/- 0.1% or for example +/- 0.5%, depending on the number of frames taken.

*Other detection techniques*

The projector according to the present disclosure is not limited for use with a LIDAR system based on a range-gating technique. The projector according to the present disclosure can be used with any distance detection techniques suitable for distance determination. Other examples besides range-gating are a direct-time-of flight detection technique or a displacement technique wherein displacement of spots with respect to reference positions are determined for deducing distance information.

Independent of the detection technique, the technical effects and advantages of the LIDAR system using a projector according to the present disclosure are directly linked to the features of the underlying projection system. As discussed above, the projector has a mixing chamber that mixes the laser light such that the resulting light pattern generated by the projector lens system is uniform, i.e. all the spots of the spot pattern have the same light intensity, including the spots at the periphery of the spot pattern. Further, the projector is robust, indeed due to the mixing of the light sources, if a single light source, e.g. an emitter of a VCSEL chip is not functioning, the effect on the light intensity of an individual spot is negligible. In addition, the laser array can advantageously be composed of a plurality of VCSEL chips, i.e. VCSEL tiles, which facilitates the production process and cost of the laser array. Finally, the mixing results in less coherent laser light and hence effects of speckle noise are reduced;

The LIDAR system according to the present disclosure is suitable for integration into a vehicle. The LIDAR system being integrated in a vehicle is arranged to operatively cover at least a part of an area surrounding the vehicle. The at least part of an area is corresponding to the scene that requires the distance determination. The area that is covered depends on the field of view (FOV) of the LIDAR device and in embodiments the FOV is for example 30° × 10° or 120°×30° or 63° × 21° or any other FOV suitable for a LIDAR system. The LIDAR system according to the disclosure is not limited to LIDARS for automotive applications but the system can also be applied to other domains where LIDARS are for example mounted on airplanes or satellites.

**Reference numbers**

| 10, 10a,10b,10c | first laser beam |
|---|---|
| 11 | pulse of a pulse train |
| 20 | second laser beam |
| 50 | pulse train |
| 60 | repetition of frames |
| 65 | processing time |
| 70 | substrate |
| 99 | scene |
| 100 | projector |
| 110 | laser array |
| 111 | laser light source |
| 111a | emission surface |
| 120 | reshaping optical system |
| 121 | first micro-lens array |
| 122 | second micro-lens array |
| 130 | projector lens system |
| 140 | mixing chamber |
| 140a | circumferential wall |
| 141 | mirror |
| 145 | diffuser |
| 146 | circulator |
| 146 | transparent mirror |
| 147 | Bragg volume grating |
| 148 | Beam expander |
| 150 | discrete spot pattern |
| 160a | Entrance face of mixing chamber |
| 160b | Exit face of mixing chamber |
| 170 | reflective wall |
| 180 | inspection openings |
| 190a | photodiodes |
| 190b | camera |
| 200 | controller |
| 300 | light receiving device |
| 350 | reflected light pattern |
| 400 | processing means |
| FP | focal plane |
| CFP | curved focal plane |

(continued)

| H | length of mixing chamber |
|---|---|
| ML[i] | micro-lens |
| RFP[i] | front focal plane of micro-lens |
| $T_i$ | tile |
| Z | main optical axis |
| X-Y | emission plane |
| $\Delta_T$ | inter-tile spacing |
| $\Delta_{VCSEL}$ | inter-vcsel spacing |

**Claims**

1. A projector (100) for illuminating a scene (99) with a discrete spot pattern, (150), said projector (100) comprises:

   • a laser array (110) comprising a plurality of discrete solid-state laser light sources (111) operable for emitting a diverging first laser beam (10),
   • a mixing chamber (140) extending along a main optical axis (Z) and configured for receiving and allowing each of said first laser beams (10) to diverge until, for each first laser beam, at least a portion of its light rays is overlapping with light rays of adjacent first laser beams,
   wherein at least a portion of an inner wall of said mixing chamber (140) is a reflective wall (170) for reflecting laser light or wherein at least a portion of an inner wall of said mixing chamber (140) comprises a mirror (141),
   • a reshaping optical system (120) configured for

   i) receiving the overlapping light rays of said first laser beams (10) exiting said mixing chamber (140), and
   ii) generating a plurality of discrete second laser beams (20) wherein each second laser beam comprises light rays originating from multiple first laser beams,

   and wherein said reshaping optical system comprises a first micro-lens array (121) comprising a plurality of micro-lenses (ML[i]), and wherein each micro-lens (ML[i]) is configured for generating one of the second laser beams (20) of said plurality of second laser beams,
   • a projector lens system (130) configured for receiving said second laser beams (20) and for projecting the second laser beams towards the scene (99), and wherein said projected second laser beams are forming said discrete spot pattern (150).

2. A projector (100) according to claim 1 wherein said reshaping optical system (120) is configured such that a number of second laser beams formed by the reshaping optical system is lower than a number of first laser beams emitted by the laser array (110).

3. A projector (100) according to anyone of previous claims wherein said plurality of discrete solid-state laser light sources are grouped into a plurality of tiles ($T_i$) and said tiles are arranged for forming a one-dimensional or a two-dimensional array of tiles, and wherein each tile ($T_i$) comprises a number ($ST_i$) of said plurality of discrete solid-state laser light sources associated to said tile ($T_i$)

4. A projector according to claim 3, further comprising a beam expander (148) configured for increasing illumination in inter-tile areas so as to increase a homogeneity of a light distribution incident on the first micro-lens array.

5. A projector (100) according to any of previous claims wherein said first micro-lens array (121) is configured such that each micro-lens (ML[i]) of the first micro-lens array comprises a focal point (RFP[i]) located on a flat plane (FP) or on a curved plane (CFP), and wherein said flat plane (FP) or said curved plane (CFP) is located between the first micro-lens array (ML[i]) and the projector lens system (130).

6. A projector (100) according to anyone of previous claims, further comprising a second micro-lens array (122) configured for decreasing a divergence angle of the first laser beams emitted by the solid-state laser light sources (111), preferably the second micro-lens array (122) is arranged between the laser array (110) and the first micro-lens array (121).

7. A projector according to anyone of previous claims, further comprising a diffuser (145) and/or a circulator (146) configured for increasing the overlapping of first laser beams within the mixing chamber.

8. A projector according to claim 6 further comprising a diffuser (145) configured for increasing the overlapping of first laser beams within the mixing chamber and wherein the diffuser (145) is arranged between said second micro-lens array (122) and said first micro-lens array (121).

9. A projector according to claim 6, further comprising a diffuser (145) and a circulator (146), and wherein the circulator (146) is arranged between said second micro-lens array (122) and said diffuser (145).

10. A projector according to claim 6 wherein the laser array (110) is composed of a number of VCSEL chips, wherein each VCSEL chip comprises a plurality of laser emitters, and wherein each laser emitter corresponds to one of said discrete solid-state laser light sources, preferably a number of micro-lenses in the second micro-lens array (122) is equal or smaller than a total number of emitters of the laser array.

11. A projector according to anyone of previous claims, further comprising a Bragg volume grating (147) configured for reducing a wavelength spread of the first laser beams.

12. A projector (100) according to anyone of previous claims wherein said laser array (110) is a one-dimensional or a two-dimensional laser array (110).

13. A projector (100) according to claim 6, wherein the laser array (110) is a back-end VCSEL array comprising said second micro-lens array (122), and wherein the second micro-lens array comprises micro-lenses ($ML_{VCSEL}[i]$) configured for reducing a divergence angle ($\theta_{VCSEL}$) of each of the vertical-cavity surface-emitting lasers of the VCSEL array, preferably the second micro-lens array (122) is etched in the substrate 70 of the back-end VCSEL array 110.

14. A solid-state LIDAR system (1) for determining distances to one or more objects of a scene (99) comprising

• a projector (100) according to anyone of previous claims for illuminating the scene (99) with a discrete spot pattern,
• a light receiving device (300) comprising a multi-pixel detector configured for detecting spots of reflected laser light representing the discrete spot pattern as reflected by the one or more objects of the scene,
• a controller (200) for controlling said projector (100) and said light receiving device (300) so as to detect and accumulate said reflected laser light in synchronization with said illumination of the scene, and
• processing means (400) configured to calculate distances to one or more objects of said scene based on said accumulated reflected laser light.

15. A vehicle comprising a solid-state LIDAR system according to claim 14 having a field of view covering at least a part of an area surrounding said vehicle, and wherein said at least part of an area corresponds to said scene.

**Patentansprüche**

1. Projektor (100) zum Ausleuchten einer Szene (99) mit einem Muster (150) separater Punkte, wobei der Projektor (100) Folgendes umfasst:

• ein Laserarray (110), das mehrere einzelne Festkörperlaserlichtquellen (111) umfasst, die so betreibbar sind, dass sie einen divergierenden ersten Laserstrahl (10) emittieren,
• eine Mischkammer (140), die sich entlang einer optischen Hauptachse (Z) erstreckt und dafür ausgelegt ist, jeden der ersten Laserstrahlen (10) zu empfangen und ein Divergieren dieser so lange zuzulassen, bis sich, für jeden ersten Laserstrahl, zumindest ein Teil seiner Lichtstrahlen mit Lichtstrahlen von benachbarten ersten Laserstrahlen überlappt, wobei zumindest ein Abschnitt einer Innenwand der Mischkammer (140) eine reflektierende Wand (170) zum Reflektieren von Laserlicht ist, oder wobei zumindest ein Abschnitt einer Innenwand der Mischkammer (140) einen Spiegel (141) umfasst,

• ein optisches Umformsystem (120), das ausgelegt ist zum

i) Empfangen der sich überlappenden Lichtstrahlen der ersten Laserstrahlen (10), die aus der Mischkammer (140) austreten, und

ii) Erzeugen mehrerer separater zweiter Laserstrahlen (20), wobei jeder zweite Laserstrahl Lichtstrahlen umfasst, die von mehreren ersten Laserstrahlen stammen,

und wobei das optische Umformsystem ein erstes Mikrolinsenarray (121) umfasst, das mehrere Mikrolinsen (ML[i]) umfasst, und wobei jede Mikrolinse (ML[i]) dafür ausgelegt ist, einen der zweiten Laserstrahlen (20) der mehreren zweiten Laserstrahlen zu erzeugen,

• ein Projektorlinsensystem (130), das dafür ausgelegt ist, die zweiten Laserstrahlen (20) zu empfangen und die zweiten Laserstrahlen in Richtung der Szene (99) zu projizieren, und wobei die projizierten zweiten Laserstrahlen das Muster (150) separater Punkte bilden.

2. Projektor (100) nach Anspruch 1, wobei das optische Umformsystem (120) derart ausgelegt ist, dass eine Anzahl von zweiten Laserstrahlen, die von dem optischen Umformsystem gebildet werden, geringer ist als eine Anzahl von ersten Laserstrahlen, die von dem Laserarray (110) emittiert werden.

3. Projektor (100) nach einem der vorhergehenden Ansprüche, wobei die mehreren separaten Festkörperlaserlichtquellen zu mehreren Kacheln ($T_i$) gruppiert sind und die Kacheln so angeordnet sind, dass sie eine eindimensionale oder eine zweidimensionale Kachelanordnung bilden, und wobei jede Kachel ($T_i$) eine Anzahl ($ST_i$) der mehreren separaten Festkörperlaserlichtquellen umfasst, die der Kachel ($T_i$) zugeordnet sind.

4. Projektor nach Anspruch 3, der ferner einen Strahlaufweiter (148) umfasst, der dafür ausgelegt ist, die Ausleuchtung in Bereichen zwischen Kacheln so zu erhöhen, dass eine Homogenität einer auf das erste Mikrolinsenarray einfallenden Lichtverteilung erhöht wird.

5. Projektor (100) nach einem der vorhergehenden Ansprüche, wobei das erste Mikrolinsenarray (121) derart ausgelegt ist, dass jede Mikrolinse (ML[i]) des ersten Mikrolinsenarrays einen Brennpunkt (RFP[i]) umfasst, der auf einer flachen Ebene (FP) oder auf einer gekrümmten Ebene (CFP) liegt, und wobei die flache Ebene (FP) oder die gekrümmte Ebene (CFP) zwischen dem ersten Mikrolinsenarray (ML[i]) und dem Projektorlinsensystem (130) liegt.

6. Projektor (100) nach einem der vorhergehenden Ansprüche, der ferner ein zweites Mikrolinsenarray (122) umfasst, das dafür ausgelegt ist, einen Divergenzwinkel der ersten Laserstrahlen, die von den Festkörperlaserlichtquellen (111) emittiert werden, zu verringern, wobei das zweite Mikrolinsenarray (122) vorzugsweise zwischen dem Laserarray (110) und dem ersten Mikrolinsenarray (121) angeordnet ist.

7. Projektor nach einem der vorhergehenden Ansprüche, der ferner einen Diffusor (145) und/oder einen Zirkulator (146) umfasst, die dafür ausgelegt sind, die Überlappung von ersten Laserstrahlen innerhalb der Mischkammer zu erhöhen.

8. Projektor nach Anspruch 6, der ferner einen Diffusor (145) umfasst, der dafür ausgelegt ist, die Überlappung von ersten Laserstrahlen innerhalb der Mischkammer zu erhöhen, und wobei der Diffusor (145) zwischen dem zweiten Mikrolinsenarray (122) und dem ersten Mikrolinsenarray (121) angeordnet ist.

9. Projektor nach Anspruch 6, der ferner einen Diffusor (145) und einen Zirkulator (146) umfasst, und wobei der Zirkulator (146) zwischen dem zweiten Mikrolinsenarray (122) und dem Diffusor (145) angeordnet ist.

10. Projektor nach Anspruch 6, wobei das Laserarray (110) aus einer Anzahl von VCSEL-Chips zusammengesetzt ist, wobei jeder VCSEL-Chip mehrere Laseremitter umfasst, und wobei jeder Laseremitter einer der separaten Festkörperlaserlichtquellen entspricht, wobei eine Anzahl von Mikrolinsen in dem zweiten Mikrolinsenarray (122) vorzugsweise gleich oder kleiner als eine Gesamtanzahl von Emittern des Laserarrays ist.

11. Projektor nach einem der vorhergehenden Ansprüche, der ferner ein Bragg-Volumengitter (147) umfasst, das dafür ausgelegt ist, eine Wellenlängenstreubreite der ersten Laserstrahlen zu verringern.

12. Projektor (100) nach einem der vorhergehenden Ansprüche, wobei das Laserarray (110) ein eindimensionales oder ein zweidimensionales Laserarray (110) ist.

13. Projektor (100) nach Anspruch 6, wobei das Laserarray (110) ein nachgeschaltetes VCSEL-Array ist, das das zweite Mikrolinsenarray (122) umfasst, und wobei das zweite Mikrolinsenarray Mikrolinsen ($ML_{VCSEL}[i]$) umfasst, die dafür ausgelegt sind, einen Divergenzwinkel ($\theta_{VCSEL}$) von jedem der oberflächenemittierenden Laser mit vertikaler Kavität des VCSEL-Arrays zu verringern, wobei das zweite Mikrolinsenarray (122) vorzugsweise in das Substrat (70) des nachgeschalteten VCSEL-Arrays (110) geätzt ist.

14. Festkörper-LIDAR-System (1) zum Ermitteln von Entfernungen zu einem oder mehreren Objekten einer Szene (99), umfassend

   • einen Projektor (100) nach einem der vorhergehenden Ansprüche zum Ausleuchten der Szene (99) mit einem Muster separater Punkte,
   • eine Lichtempfangsvorrichtung (300), die einen Mehrpixeldetektor umfasst, der dafür ausgelegt ist, Punkte reflektierten Laserlichts zu detektieren, die das Muster separater Punkte, wie es von dem einen oder den mehreren Objekten der Szene reflektiert wird, repräsentieren,
   • eine Steuerung (200) zum Steuern des Projektors (100) und der Lichtempfangsvorrichtung (300) so, dass sie das reflektierte Laserlicht in Synchronisation mit der Ausleuchtung der Szene detektieren und auffangen, und
   • Verarbeitungsmittel (400), die dafür ausgelegt sind, Entfernungen zu einem oder mehreren Objekten der Szene basierend auf dem aufgefangenen reflektierten Laserlicht zu berechnen.

15. Fahrzeug, das ein Festkörper-LIDAR-System nach Anspruch 14 umfasst, welches ein Sichtfeld aufweist, das zumindest einen Teil eines Bereichs abdeckt, der das Fahrzeug umgibt, und wobei der zumindest eine Teil eines Bereichs der Szene entspricht.

## Revendications

1. Projecteur (100) pour éclairer une scène (99) avec un motif de points discrets (150), ledit projecteur (100) comprenant :

   • un réseau laser (110) comprenant une pluralité de sources de lumière laser à l'état solide discrètes (111) pouvant être mises en œuvre pour émettre un premier faisceau laser divergent (10),
   • une chambre de mélange (140) s'étendant le long d'un axe optique principal (Z) et configurée pour recevoir et permettre à chacun desdits premiers faisceaux laser (10) de diverger jusqu'à ce que, pour chaque premier faisceau laser, au moins une portion de ses rayons lumineux se chevauche avec des rayons lumineux de premiers faisceaux laser adjacents, dans laquelle au moins une portion d'une paroi interne de ladite chambre de mélange (140) est une paroi réfléchissante (170) pour réfléchir la lumière laser, ou dans laquelle au moins une portion d'une paroi interne de ladite chambre de mélange (140) comprend un miroir (141),
   • un système optique de remodelage (120) configuré pour

      i) recevoir les rayons lumineux se chevauchant desdits premiers faisceaux laser (10) sortant de ladite chambre de mélange (140), et
      ii) générer une pluralité de seconds faisceaux laser discrets (20), dans lesquels chaque second faisceau laser comprend des rayons lumineux provenant de multiples premiers faisceaux laser,

   et dans lequel ledit système optique de remodelage comprend un premier réseau de micro-lentilles (121) comprenant une pluralité de micro-lentilles (ML[i]), et dans lequel chaque micro-lentille (ML[i]) est configurée pour générer l'un des seconds faisceaux laser (20) de ladite pluralité de seconds faisceaux laser,
   • un système de lentilles de projecteur (130) configuré pour recevoir lesdits seconds faisceaux laser (20) et pour projeter les seconds faisceaux laser vers la scène (99), et dans lequel lesdits seconds faisceaux laser projetés forment ledit motif de points discrets (150).

2. Projecteur (100) selon la revendication 1, dans lequel ledit système optique de remodelage (120) est configuré de telle sorte que le nombre de seconds faisceaux laser formés par le système optique de remodelage est inférieur au nombre de premiers faisceaux laser émis par le réseau laser (110).

3. Projecteur (100) selon l'une quelconque des revendications précédentes, dans lequel ladite pluralité de sources lumineuses laser à l'état solide discrètes est regroupée en une pluralité de pavés ($T_i$) et lesdits pavés sont agencés de façon à former un réseau de pavés à une ou deux dimensions, et dans lequel chaque pavé ($T_i$) comprend un

certain nombre (ST$_i$) de ladite pluralité de sources de lumière laser à l'état solide discrètes associées audit pavé (T$_i$).

4. Projecteur selon la revendication 3, comprenant en outre un agrandisseur de faisceau (148) configuré pour augmenter l'éclairage dans des zones entre pavés de façon à augmenter l'homogénéité de la répartition de la lumière incidente sur le premier réseau de micro-lentilles.

5. Projecteur (100) selon l'une quelconque des revendications précédentes, dans lequel ledit premier réseau de micro-lentilles (121) est configuré de telle sorte que chaque micro-lentille (ML[i]) du premier réseau de micro-lentilles comprend un point focal (RFP[i]) situé sur un plan plat (FP) ou sur un plan incurvé (CFP), et dans lequel ledit plan plat (FP) ou ledit plan incurvé (CFP) est situé entre le premier réseau de micro-lentilles (ML[i]) et le système de lentilles de projecteur (130).

6. Projecteur (100) selon l'une quelconque des revendications précédentes, comprenant en outre un second réseau de micro-lentilles (122) configuré pour diminuer un angle de divergence des premiers faisceaux laser émis par les sources de lumière laser à l'état solide (111), de préférence le second réseau de micro-lentilles (122) est agencé entre le réseau laser (110) et le premier réseau de micro-lentilles (121).

7. Projecteur selon l'une quelconque des revendications précédentes, comprenant en outre un diffuseur (145) et/ou un circulateur (146) configurés pour augmenter le chevauchement de premiers faisceaux laser à l'intérieur de la chambre de mélange.

8. Projecteur selon la revendication 6, comprenant en outre un diffuseur (145) configuré pour augmenter le chevauchement de premiers faisceaux laser à l'intérieur de la chambre de mélange et dans lequel le diffuseur (145) est agencé entre ledit second réseau de micro-lentilles (122) et ledit premier réseau de micro-lentilles (121).

9. Projecteur selon la revendication 6, comprenant en outre un diffuseur (145) et un circulateur (146), et dans lequel le circulateur (146) est agencé entre ledit second réseau de micro-lentilles (122) et ledit diffuseur (145).

10. Projecteur selon la revendication 6, dans lequel le réseau laser (110) est composé d'un certain nombre de puces VCSEL, dans lequel chaque puce VCSEL comprend une pluralité d'émetteurs laser, et dans lequel chaque émetteur laser correspond à l'une desdites sources de lumière laser à l'état solide discrètes, de préférence le nombre de micro-lentilles dans le second réseau de micro-lentilles (122) est égal ou inférieur au nombre total d'émetteurs du réseau laser.

11. Projecteur selon l'une quelconque des revendications précédentes, comprenant en outre un réseau de diffraction volumique de Bragg (147) configuré pour réduire une dispersion de longueur d'onde des premiers faisceaux laser.

12. Projecteur (100) selon l'une quelconque des revendications précédentes, dans lequel ledit réseau laser (110) est un réseau laser à une ou deux dimensions (110).

13. Projecteur (100) selon la revendication 6, dans lequel le réseau laser (110) est un réseau VCSEL dorsal comprenant ledit second réseau de micro-lentilles (122), et dans lequel ledit second réseau de micro-lentilles comprend des micro-lentilles (ML$_{VCSEL}$[i]) configurées pour réduire un angle de divergence ($\theta_{VCSEL}$) de chacun des lasers à émission de surface à cavité verticale du réseau VCSEL, de préférence le second réseau de micro-lentilles (122) est gravé dans le substrat 70 du réseau VCSEL dorsal 110.

14. Système LIDAR à l'état solide (1) pour déterminer des distances jusqu'à un ou plusieurs objets d'une scène (99) comprenant :

   • un projecteur (100) selon l'une quelconque des revendications précédentes pour éclairer la scène (99) avec un motif de points discrets,
   • un dispositif de réception de lumière (300) comprenant un détecteur multipixel configuré pour détecter des points de lumière laser réfléchie représentant le motif de points discrets tels que réfléchi par le ou les plusieurs objets de la scène,
   • une unité de commande (200) pour commander ledit projecteur (100) et ledit dispositif de réception de lumière (300) de manière à détecter et accumuler ladite lumière laser réfléchie en synchronisation avec ledit éclairage de la scène, et
   • des moyens de traitement (400) configurés pour calculer des distances jusqu'à un ou plusieurs objets de ladite scène sur la base de ladite lumière laser réfléchie accumulée.

15. Véhicule comprenant un système LIDAR à l'état solide selon la revendication 14, ayant un champ de vision couvrant au moins une partie d'une zone entourant ledit véhicule, et dans lequel ladite au moins une partie d'une zone correspond à ladite scène.

Fig. 1

EP 4 025 930 B1

150

99

Fig. 2

$$P_P = 1/F_P$$

$$PW$$

50

11  11  11  11  11

Time

Fig. 3

$$P_F = 1/F_F$$

60

50  50  50

65  65  65

Time

Fig. 4

EP 4 025 930 B1

Fig. 5

EP 4 025 930 B1

Fig. 6

EP 4 025 930 B1

Fig. 7

EP 4 025 930 B1

Fig. 8

Fig. 10

Fig. 9

EP 4 025 930 B1

Fig. 11

Fig. 12

Fig. 13

EP 4 025 930 B1

Fig. 14a

Fig. 14b

EP 4 025 930 B1

Fig. 14c

Fig. 14d

EP 4 025 930 B1

EP 4 025 930 B1

Fig. 14e

Fig. 14f

EP 4 025 930 B1

Fig. 14g

Fig. 14h

Fig. 15a

Fig. 15b

EP 4 025 930 B1

Fig. 16a

Fig. 16b

Fig. 17a

Fig. 17b

Fig. 18

Fig. 19

**EP 4 025 930 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017068199 A
- US 2016025993 A1
- WO 2015004213 A